# EUROPEAN PATENT SPECIFICATION

(11) **EP 1 837 634 B1**
(45) Date of publication and mention of the grant of the patent: **11.01.2012**
(21) Application number: 06013522.5
(22) Date of filing: 29.06.2006
(51) Int. Cl.: G01F 23/16

(54) **Liquid level measurement apparatus**
Flüssigkeitsstandmesssystem
Appareil de mesure du niveau de liquide

(30) Priority: 21.03.2006 KR 20060025657
(43) Date of publication of application: 26.09.2007
(73) Proprietor: PAN-ASIA PRECISION & ENGINEERING Co., LTD., Gangseo-gu Busan 618-270 (KR)
(72) Inventor: Lee,Soo-Tae, Busan 618-270 (KR); Pyo,Tae -Sung, Busan 604-020 (KR); Lee,Su-Kyu, Busan 617-030 (KR)
(74) Representative: Klunker . Schmitt-Nilson . Hirsch

(56) References cited:
- US-A- 1 399 205
- US-A- 4 554 830
- US-A- 5 901 603

## Description

### BACKGROUND OF THE INVENTION

### 1. Field of the Invention

The present invention relates to a liquid level measurement apparatus for measuring the level of liquid stored in a tank using compressed air and, more particularly, to a liquid level measurement apparatus, including a supply unit, which is closed when compressed air flows into the supply unit and pressure of the compressed air exceeds a predetermined pressure, is opened when the pressure of the compressed air is below the predetermined pressure, and controls so that the compressed air flows at a constant flow rate when the supply unit is opened, a backflow preventing unit which is controlled according to whether the compressed air flows into the supply unit, and is opened and connected to a tank storing liquid when the compressed air flows into the supply unit, and is closed when the compressed air does not flow into the supply unit, thus preventing the liquid whose level is to be measured from flowing backward from the tank, a protecting unit which is closed when the compressed air fed through the supply unit flows through the backflow preventing unit and the pressure of the compressed air exceeds the predetermined pressure, and is opened when the pressure of the compressed air is below the predetermined pressure, thus permitting the compressed air to flow, and opens or closes the supply unit depending on the pressure of the compressed air fed into the supply unit, and a measuring unit which opens or closes the protecting unit depending on the pressure of the compressed air fed into the protecting unit, and draws the compressed air from the protecting unit when the protecting unit is open, and thereafter compares the pressure of the compressed air with atmospheric pressure, and calculates the pressure of the compressed air, thus measuring a level of the liquid stored in the tank.

### 2. Description of the Related Art

A conventional liquid level measurement apparatus is connected to a tank through a pipeline having a maximum length of about 200m. As time goes by, various kinds of impurities are deposited in a pipe, and lead to the loss of pressure in the pipe, thus causing an error in measuring a liquid level. In order to prevent this, the interior of the pipe must be periodically cleaned. At this time, high-pressure compressed air is supplied to the pipe to clean the interior of the pipe. However, the compressed air is forcefully transmitted to other components as well as the tank, so that the liquid level measurement apparatus may be damaged or deformed.

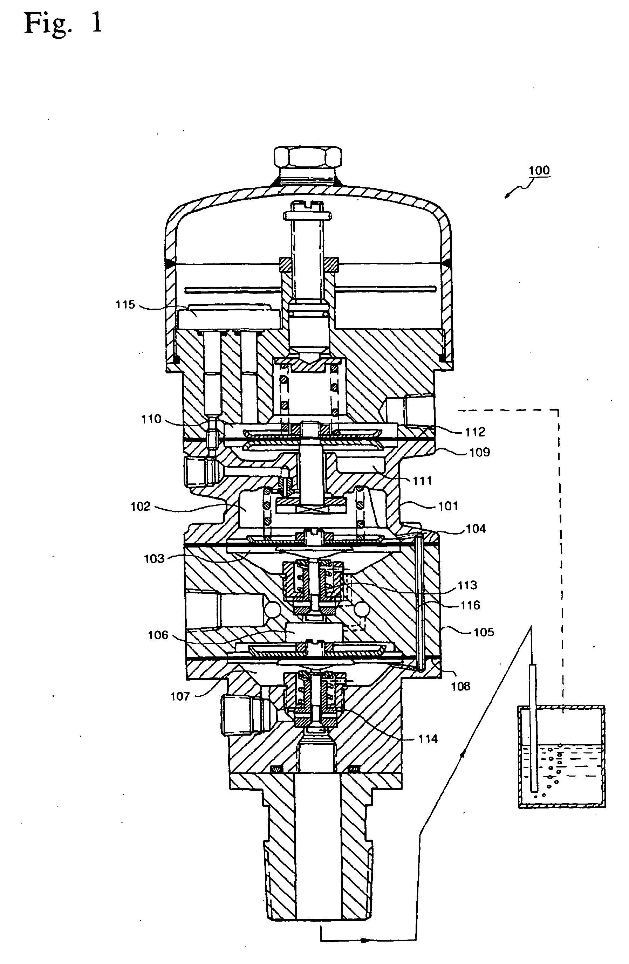

FIG. 1 is a sectional view showing a conventional liquid level measurement apparatus according to the preamble of claim 1.

In order to solve the above-mentioned problem, US Patent No. 4,554,830, dealing with a liquid level measurement apparatus 100, has been proposed, and is shown in FIG. 1. Referring to the drawing, a main enclosure 101 is partitioned into an upper chamber 102 and a lower chamber 103 by a partitioning membrane 104. An auxiliary enclosure 105 is connected to the lower portion of the main enclosure 101, and is partitioned into an upper auxiliary chamber 106 and a lower auxiliary chamber 107 by another partitioning membrane 108. A reference enclosure 109 is connected to the upper portion of the main closure 101, and is partitioned into a reference chamber 110 and a protective chamber 111 by another partitioning membrane 112. In this case, a valve 113 is provided between the lower chamber 103 and the upper auxiliary chamber 106, an inlet pipe is additionally provided to introduce compressed air, and a probe valve 114 is provided in the lower auxiliary chamber 107 so as to prevent the backflow of liquid stored in a tank. The upper chamber 102 controls the reference chamber 110 and the protective chamber 111 so as to prevent excessive pressure from acting on a pressure sensing member 115 provided in the reference enclosure 109. Further, the valve 113 controlling the supply of compressed air and the probe valve 114, serving as a backflow preventing means, are connected to the partitioning membranes 104 and 108, respectively. The upper chamber 102 and the lower auxiliary chamber 107 are connected to each other through a pipe conduit 116, thus measuring a liquid level.

However, the conventional liquid level measurement apparatus 100 is problematic in that it must be precisely manufactured to control the on/off operation of the valve 113 and the probe valve 114, and the entire construction of the apparatus is complicated, so that it is not easy to manufacture respective components.

Further, since the upper chamber 102 and the lower auxiliary chamber 107 are directly connected to each other through the pipe conduit 116, the flow course of the compressed air is short, so that hunting may occur when the compressed air flows. The conventional liquid level measurement apparatus 100 has another problem in that, when overpressurized compressed air flows into the apparatus, there is little reduction in pressure, due to friction during the flow of the compressed air to the upper chamber 102 and the pressure sensing member 115, so that overpressure preventing efficiency is low.

### SUMMARY OF THE INVENTION

The object of the present invention is to provide a liquid level measurement apparatus, in which a flow control operation and a backflow preventing operation are conducted using O-rings, so that the construction is simpler and the apparatus can be more efficiently sealed.

Another object of the present invention is to provide a liquid level measurement apparatus, in which the same module is used for a flow control unit and a backflow preventing valve, so that the construction of passages coupling chambers to each other is simple, and the entire construction is simple, thus being convenient to manufacture. This is achieved by the features of claim 1.

The present invention provides a liquid level measurement apparatus, in which a partitioning membrane is made of a special synthetic resin material having flexibility and durability, so that it can be used for a longer period.

The present invention also provides a liquid level measurement apparatus, in which compressed air is shunted to a measuring unit, thus lengthening the flow course of the compressed air, therefore preventing hunting that may occur during the flow of the compressed air, and eliminating some hydraulic pressure due to friction when overpressurized compressed air flows into the apparatus and is transmitted to the measuring unit. Thereby, the damage resulting from the inflow of overpressurized compressed air can be more efficiently prevented.

Preferred embodiments are defined by the dependent claims.

According to a specific embodiment, the flow control unit includes a hollow body fastened to the supply unit, a hollow support block fastened to the body, with a through hole being formed at a predetermined position in the support block to draw air, a movable valve to control a flow of compressed air in the body, an O-ring to open or close the flow control unit, according to movement of the movable valve, a valve control member supported between a lower end of the movable valve and an upper end of the support block, and controlling movement of the movable valve, and an O-ring to prevent the compressed air from leaking from between the supply unit and the body. The backflow preventing valve includes a hollow body fastened to the backflow preventing unit, a hollow support block fastened to the body, with a through hole formed at a predetermined position in the support block to draw air, a movable valve to control a flow of compressed air in the body, an O-ring to open or close the backflow preventing valve, according to movement of the movable valve, a valve control member supported between a lower end of the movable valve and an upper end of the support block, and controlling movement of the movable valve, and an O-ring to prevent the compressed air from leaking from between the backflow preventing unit and the body. The overpressure preventing unit includes a hollow body having on a sidewall thereof an inlet port that communicates with the second inlet path to draw compressed air, the compressed air fed into the inlet port circulating in the body, an overpressure preventing valve movably provided in the body, and opening or closing the overpressure preventing unit, an O-ring to open or close the overpressure preventing unit by movement of the overpressure preventing valve, a valve control member to control the movement of the overpressure preventing valve, a support block to support the valve control member, an O-ring to prevent the compressed air from leaking from between the protecting unit and the body, and a flow control member connected to a lower end of the support block and supported by an upper surface of the second partitioning unit, the flow control member controlling movement of the second partitioning unit, according to pressure of the compressed air stored in the first chamber.

According to a further aspect of the invention, the body of the flow control unit further includes a flow channel which has a predetermined depth and is provided on an upper surface of the body contacting the movable valve to allow the compressed air to smoothly flow when the flow control unit is opened. Each of the backflow preventing valve and the overpressure preventing unit includes, on an upper surface of the body thereof, a flow channel to perform the same function as the flow channel of the flow control unit.

The air supply part further includes a moisture removal filter provided at an end of the air supply part, and filtering the fed compressed air to supply pure air, and an O-ring provided between the filter and the air supply part, and preventing the compressed air from leaking out.

The moisture removal filter includes a mounting flange such that the filter is mounted to the air supply part through fitting without using an additional mounting component.

The flow adjusting unit further includes a flow supply part to communicate with the first supply path, a flow adjusting valve to adjust an amount of compressed air supplied to the flow supply part, and an O-ring and a protective cap to prevent the compressed air from leaking from between the flow adjusting unit and the supply unit.

The flow adjusting valve is tapered towards one end in such a way as to be inclined, and to adjust a sectional area of a flow adjusting path that makes the first chamber and the flow supply part communicate each other, thus adjusting a flow rate of compressed air supplied to the flow supply part.

The overpressure control part includes an overpressure control member supported by an upper surface of the third partitioning unit, and controlling movement of the third partitioning unit, depending on the pressure of the compressed air fed into the fourth chamber, and a compression adjusting part connected to an upper surface of the overpressure control member, and fastened to the measuring unit, thus adjusting a pressure to which the overpressure control member responds, according to the fastening degree thereof.

The measuring unit further includes a cover to protect internal components from an exterior, and sealed by inserting an O-ring at a junction of the cover and the measuring unit.

The flow supply part further includes a supply path for checking whether the components are operating correctly, by injecting a predetermined pressure of air into the first supply path without passing the air through the air supply part.

The protecting unit further includes an adhesion preventing unit communicating with the second inlet path and the fourth chamber and discharging compressed air therethrough so as to prevent an O-ring, which is connected to the overpressure preventing valve and opens or closes the overpressure preventing unit when overpressure acts on an interior of the protecting unit and the overpressure preventing unit is closed, from adhering to the body of the overpressure preventing unit, so that the overpressure control member moves the overpressure preventing valve through the third partitioning unit.

The adhesion preventing unit includes an adhesion preventing valve to control connection between the adhesion preventing unit and the fourth chamber, a valve control member to control movement of the adhesion preventing valve, a protective cap to support the valve control member and protect the adhesion preventing valve from an exterior, with an insert hole formed in the protective cap so that the adhesion preventing valve is movably inserted into the insert hole, an O-ring to open or close the adhesion preventing unit by movement of the adhesion preventing valve, and an O-ring to form a seal between the protective cap and the protecting unit.

The first partitioning unit further includes an elastic body made of a synthetic resin material having flexibility and durability, an upper stopper to support an upper surface of the elastic body, and a lower stopper to support a lower surface of the elastic body. Each of the second and third partitioning units further includes an elastic body made of the same material as that of the first partitioning unit, an upper stopper, and a lower stopper.

The synthetic resin material from which the elastic body is made is selected from a group consisting of NBR and NYLON66.

The protecting unit is sealed by forcibly fitting a metal ball into a hole, which is formed through a process for making the second inlet path and has a diameter smaller than that of the metal ball.

The opening further includes a moisture removal filter provided at a junction of the opening and the measuring unit, and preventing moisture from entering the measured value converting part, and a pipe conduit perpendicularly provided to protect the measured value converting part from moisture, and communicating with the measured value converting part.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a sectional view of a conventional liquid level measurement apparatus;
FIG. 2 is a perspective view of a liquid level measurement apparatus, according to the present invention;
FIG. 3 is a sectional view of the entire liquid level measurement apparatus, according to the present invention;
FIG. 4a is a vertical sectional view of a supply unit, according to the present invention;
FIG. 4b is a horizontal projection view showing a body of the supply unit, according to the present invention;
FIG. 4c is a view illustrating the supply unit according to the present invention, in a sectional view taken along line A-A of FIG. 4b and a partial enlarged view;
FIG. 4d is an exploded perspective view of a flow control unit of the supply unit, according to the present invention;
FIG. 4e is a perspective view of a flow adjusting unit of the supply unit, according to the present invention;
FIG. 5 is an exploded perspective view of a partitioning unit, according to the present invention;
FIG. 6 is a vertical sectional view of a backflow preventing unit, according to the present invention;
FIG. 7a is a vertical sectional view of a protecting unit, according to the present invention;
FIG. 7b is a horizontal projection view of the protecting unit, according to the present invention;
FIG. 7c is a sectional view taken along line A-A of FIG. 7b, showing the protecting unit according to the present invention;
FIG. 7d is an exploded perspective view showing an overpressure preventing unit of the protecting unit, according to the present invention;
FIG. 7e is a perspective view showing an adhesion preventing unit of the protecting unit, according to the present invention; and
FIG. 8 is a vertical sectional view of a measuring unit, according to the present invention.

### DESCRIPTION OF THE PREFERRED EMBODIMENTS

Hereinafter, a liquid level measurement apparatus according to the preferred embodiment of the present invention will be described below with reference to the accompanying drawings.

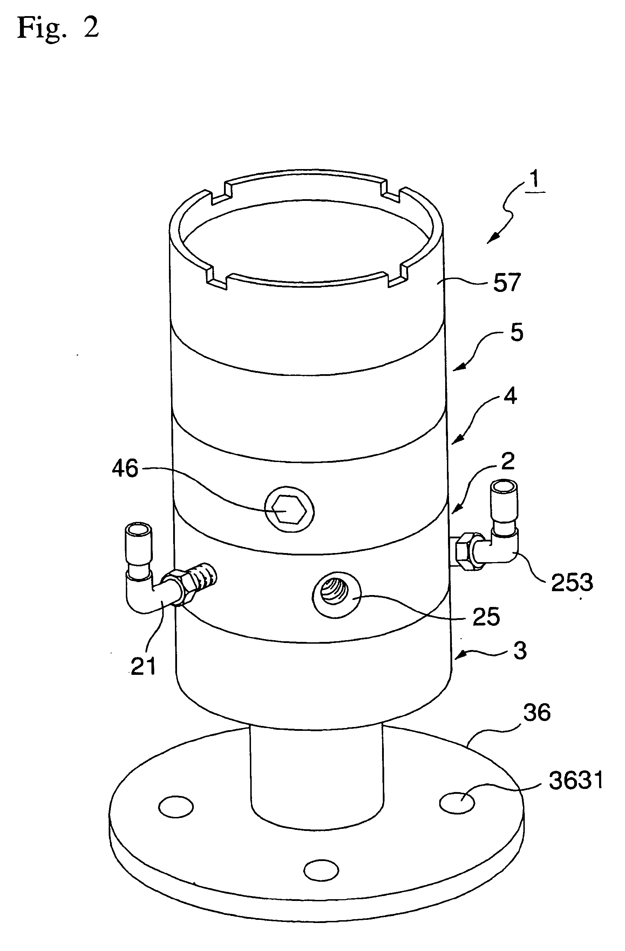

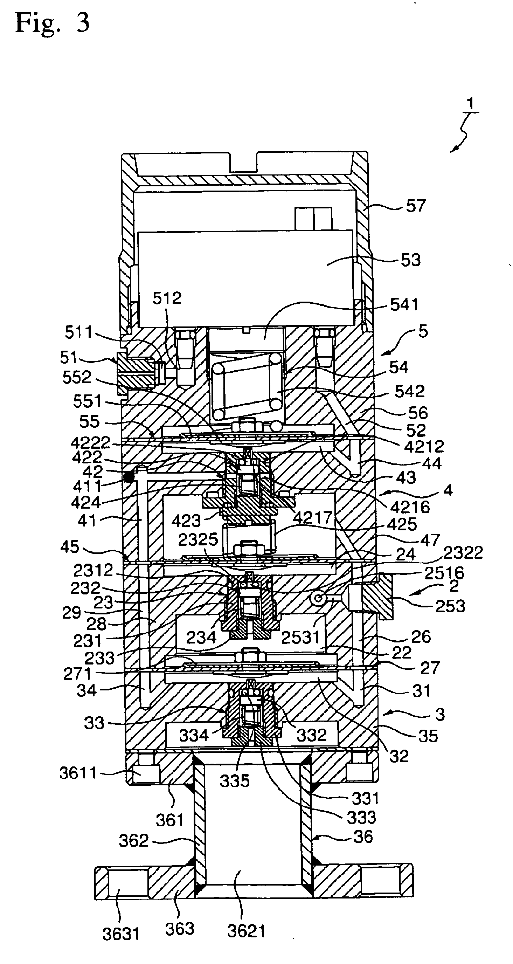

FIG. 2 is a perspective view of a liquid level measurement apparatus, according to the present invention, and FIG. 3 is a sectional view illustrating the entire liquid level measurement apparatus, according to the present invention.

Referring to FIGS. 2 and 3, a liquid level measurement apparatus 1 according to the invention includes a supply unit 2, a backflow preventing unit 3, a protecting unit 4, and a measuring unit 5.

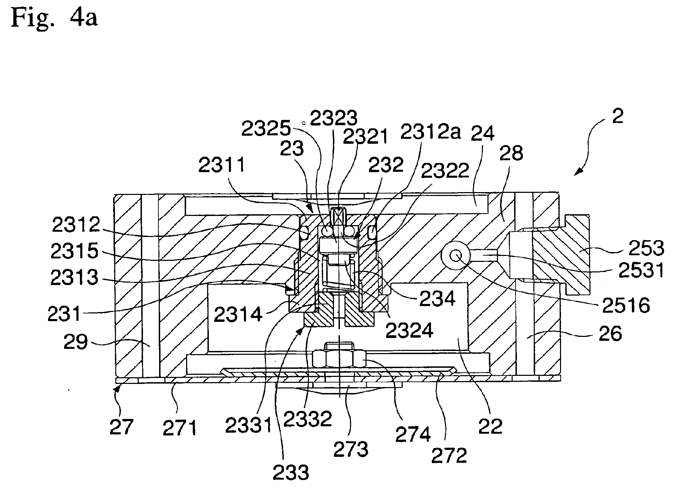

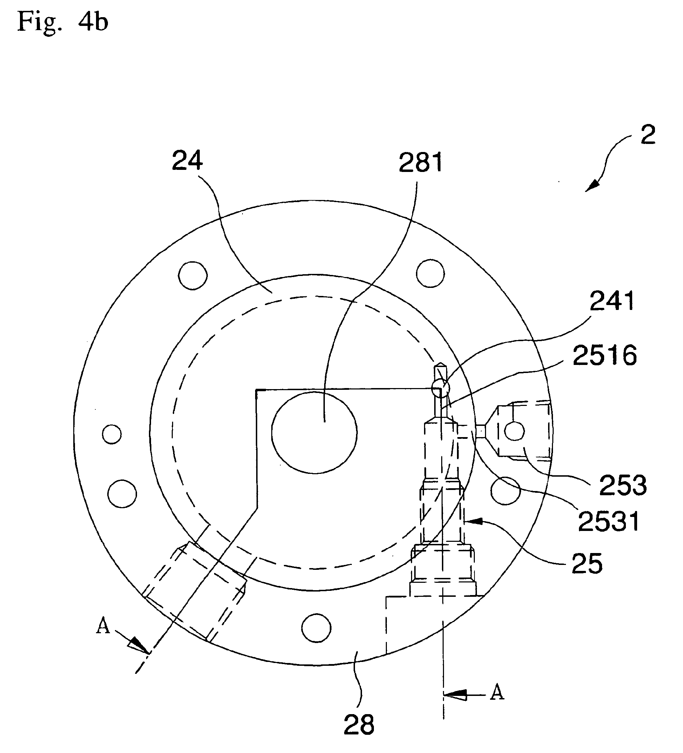

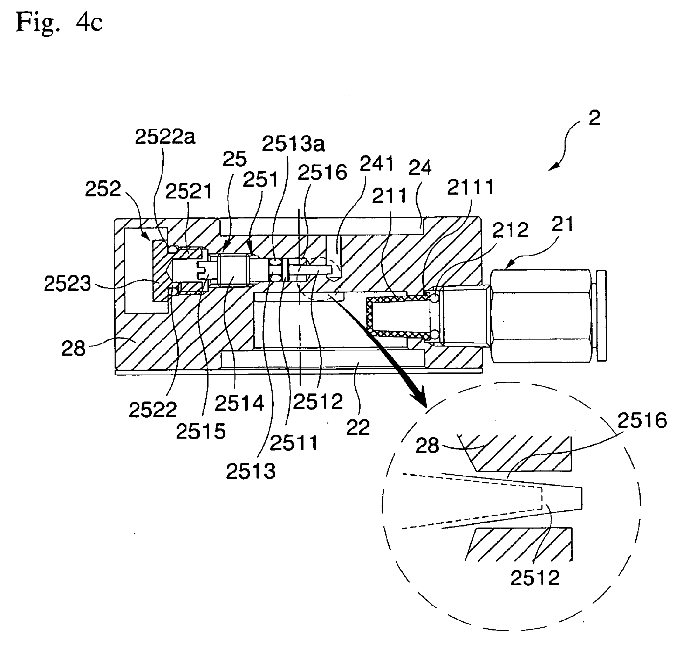

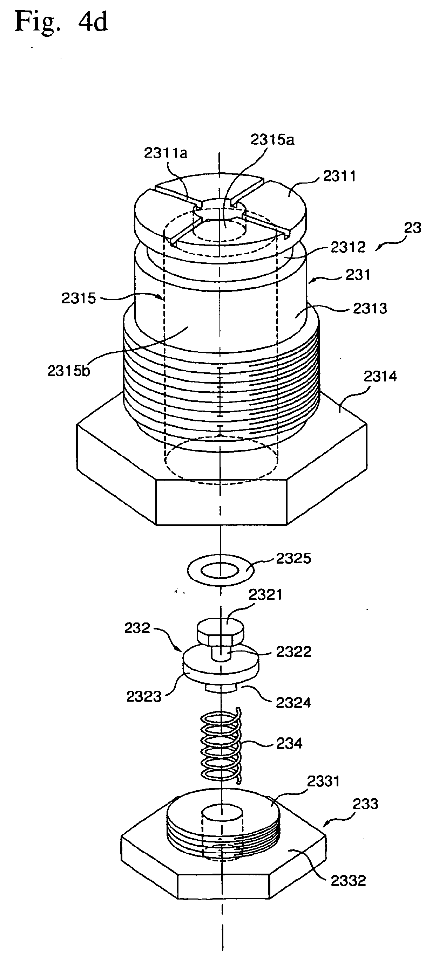

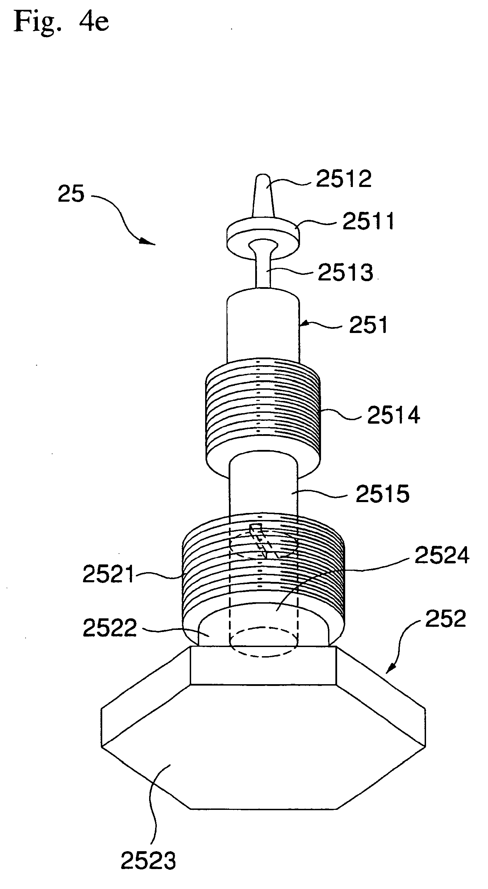

FIG. 4a is a vertical sectional view of a supply unit, according to the present invention, FIG. 4b is a horizontal projection view showing a body of the supply unit, according to the present invention, FIG. 4c is a view illustrating the supply unit, according to the present invention, in a sectional view taken along line A-A of FIG. 4b and a partial enlarged view, FIG. 4d is an exploded perspective view of a flow control unit of the supply unit, according to the present invention, and FIG. 4e is a perspective view of a flow adjusting unit of the supply unit, according to the present invention.

Referring to FIGS. 4a to 4e, the supply unit 2 includes an air supply part 21, a second chamber 22, a flow control unit 23, a first chamber 24, a flow adjusting unit 25, a first supply path 26, a first partitioning unit 27, and a body 28 enclosing the components.

Referring to FIG. 4c, the air supply part 21 has the shape of a hollow pipe to feed compressed air into the liquid level measurement apparatus 1. One side of the air supply part 21 is connected to an external pipe, while a thread is provided on the outer circumferential surface of the other side of the air supply part 21 to engage with the body 28 of the supply unit 2. Further, a filter 211 and an O-ring 212 are provided on an end of the air supply part 21.

The filter 211 is a moisture removal filter that filters the introduced compressed air so as to allow only pure air to enter the liquid level measurement apparatus 1. One end of the filter 211 is inserted into the supply unit 2, and the other end is connected to the air supply part 21. The filter 211 includes a mounting flange 2111.

The mounting flange 2111 is a hollow flange which is provided at an end of the filter 211 connected to the air supply part 21 and has a diameter larger than that of a hole formed in the air supply part 21 to receive the filter 211. The mounting flange 2111 allows the filter 211 to be mounted to the air supply part 21 through fitting without using an additional mounting component.

The O-ring 212 is interposed between the air supply part 21 and the filter 211, and seals the gap therebetween so as to prevent the leakage of compressed air.

Part of the filter 211 of the air supply part 21 is inserted into the second chamber 22, so that the second chamber 22 stores the compressed air so as to measure a liquid level.

The flow control unit 23 will be described with reference to FIG. 4a. That is, part of the flow control unit 23 is inserted into the second chamber 22, and is fastened to an internal thread formed on the body 28 of the supply unit 2. The flow control unit 23 includes a body 231, a movable valve 232, a support block 233, and a valve control member 234.

Referring to FIG. 4d, the body 231 includes a flange 2311, an O-ring seat 2312, a fastening cylinder 2313, a tool fitting block 2314, and a moving hole 2315.

The flange 2311 is a hollow disc-shaped flange that allows the movable valve 232, which will be described below in detail, to move in the body 231 without being removed therefrom, and may be opened or closed by an O-ring 2325. A through hole 2315a of a predetermined diameter, contained in the moving hole 2315, is formed in the flange 2311. The flange 2311 further includes flow channels 2311a.

Each of the flow channels 2311a is formed on the upper surface of the flange 2311 to have a predetermined depth, and is formed to communicate with the through hole 2315a of the moving hole 2315 that will be described below in detail. In the operation of the liquid level measurement apparatus 1 which will be described later in detail, the flow channels 2311a are operated as follows. That is, referring to FIGS. 3 and 4d, when the flow control unit 23 is opened, the first partitioning unit 27 moves downwards and closes the through hole 2315a formed in the flange 2311, thus hindering the flow of compressed air. Thus, even in such a case, the flow channels 2311a must communicate with the through hole 2315a to facilitate the flow of compressed air. To this end, the flow channels 2311a may be provided on the upper surface of the flange 2311 in the form of a cross. However, any form of channel is possible as long as it achieves the above-mentioned purpose.

The O-ring seat 2312 extends from the lower surface of the flange 2311 to a predetermined length, and has a diameter smaller than that of the flange 2311. Referring to FIG. 4a, the O-ring 2312a is fitted over the O-ring seat 2312, thus preventing compressed air from leaking from between the body 231 and the body 28 of the supply unit 2.

The fastening cylinder 2313 has the shape of a hollow cylinder which extends from the lower surface of the 0-ring seat 2312 to a predetermined length and has a diameter larger than that of the O-ring seat 2312. A thread is provided on the outer circumferential surface of the lower portion of the fastening cylinder 2313. Referring to FIG. 4a, the flow control unit 23 is fastened to a center hole 281 (see, FIG. 4b) of the body 28 of the supply unit 2, using the thread provided on the lower portion of the fastening cylinder 2313.

The tool fitting block 2314 is a hollow cover which extends downwards from the lower surface of the fastening cylinder 2313 to a predetermined length and has a diameter larger than that of the fastening cylinder 2313. The moving hole 2315, which will be described below in detail, extends from the O-ring seat 2312 along the central axis of the tool fitting block 2314. An internal thread is provided on the inner circumferential surface of the lower end of the tool fitting block 2314. The tool fitting block 2314 has the shape of a nut, so that the flow control unit 23 is fastened to the center hole 281 (see, FIG. 4b) formed in the body 28 of the supply unit 2 by turning the tool fitting block 2314 using a tool, such as a spanner. However, the tool fitting block may have various shapes, including a polygonal shape, as long as it performs the above-mentioned function.

The moving hole 2315 is a space which is defined in the body 231 so that compressed air flows when the flow control unit 23 is opened, and the movable valve 232 is movable. The moving hole 2315 includes the through hole 2315a and a guide hole 2315b.

The diameter of the through hole 2315a, formed in the flange 2311, is determined so that the flow control unit 23 is closed when the O-ring 2325, interposed between the flange 2311 and the movable valve 232, is in close contact with the lower surface of the flange 2311.

The guide hole 2315b is a passage for compressed air, which extends from the lower end of the through hole 2315a to the lower surface of the tool fitting block 2314 and has a diameter larger than that of the through hole 2315a. The guide hole 2315b is used as a space for moving the movable valve 232, which will be described below in detail, so as to open or close the flow control unit 23.

The movable valve 232 moves up and down along the moving hole 2315, thus opening or closing the flow control unit 23. The movable valve 232 includes a plug 2321, an O-ring seat 2322, a press cylinder 2323, and a support rod 2324.

The plug 2321 extends downwards from an elliptical upper surface to a predetermined length. The plug 2321 is movable in the through hole 2315a formed in the flange 2311 of the body 231. In order to allow compressed air to more smoothly flow through the through hole 2315a, the plug 2321 has an elliptical cross-section. However, the plug 2321 may have a different cross-section, such as a circular cross-section, as long as it permits the smooth flow of the compressed air. Further, when the liquid level measurement apparatus 1 is operated, the plug 2321 is operated as follows. That is, referring to FIG. 3, when overpressurized compressed air flows into the supply unit 2, the plug 2321 passes through the through hole 2315a to protrude upwards due to the valve control member 234, and the compressed air passage is closed by the O-ring 2325. However, when compressed air does not flow into the supply unit 2 or compressed air having a pressure which is lower than a predetermined pressure flows into the supply unit 2, the plug 2321 is pressed by a second partitioning unit 45 and move downwards. Thereby, the passage is opened.

The O-ring seat 2322 has the shape of a cylinder which extends from the lower surface of the plug 2321 to a predetermined length and has a diameter smaller than that of the plug 2321. The O-ring 2325, which has a predetermined diameter and seals the through hole 2315a formed in the flange 2311 of the body 231, is fitted over the O-ring seat 2322, thus directly opening or closing the flow control unit 23 during the operation of the liquid level measurement apparatus 1.

The press cylinder 2323 has the shape of a cylinder which extends from the lower surface of the O-ring seat 2322 to a predetermined length and has a diameter larger than that of the 0-ring seat 2322. The press cylinder 2323 has a diameter which is larger than that of the through hole 2315a formed in the flange 2311 of the body 231, but smaller than that of the moving hole 2315 of the body 231. Referring to FIG. 4a, the upper surface of the press cylinder 2323 supports the O-ring 2325 fitted over the O-ring seat 2322, while the lower surface of the press cylinder 2323 supports an end of the valve control member 234 of the flow control unit 23, which will be described below in detail.

The support rod 2324 has the shape of a cylinder which extends from the lower surface of the press cylinder 2323 to a predetermined length and has a diameter smaller than that of the press cylinder 2323. The support rod 2324 has a predetermined diameter so that an end of the valve control member 234 of the flow control unit 23 is fitted over the support rod 2324.

The support block 233 is fastened to the body 231 to supply compressed air, and includes a fastening shank 2331 and a head 2332.

The fastening shank 2331 has the shape of a hollow cylinder having a through hole. An external thread is formed on the outer circumferential surface of the fastening shank 2331 to engage with the internal thread formed in the tool fitting block 2314.

The head 2332 is coupled to the lower surface of the fastening shank 2331, has a larger diameter than that of the fastening shank 2331, and extends downwards from the fastening shank 2331 to a predetermined length. The head 2332 has the shape of a hollow nut which has a through hole communicating with the through hole of the fastening shank 2331 to feed compressed air into the body 231. Referring to FIGS. 4a and 4d, the head 2332 has the shape of a nut so that the support block 233 is easily fastened to the body 231 by turning the head 2332 using a tool, such as a spanner. However, the head 2332 may have various shapes, including a polygonal shape, as long as the support block 233 is easily fastened to the body 231.

The valve control member 234 comprises an elastic member which is contracted by a predetermined external pressure and is restored to its original shape when the external pressure is removed. The valve control member 234 is secured to the support rod 2324 of the movable valve 232 to be supported by the lower surface of the press cylinder 2323 and the upper surface of the fastening shank 2331 of the support block 233. When the liquid level measurement apparatus 1 is operated, the valve control member 234 is operated as follows. That is, referring to FIG. 3, the valve control member 234 is contracted by external pressure transmitted from the second partitioning unit 45 so that the movable valve 232 moves downwards. Meanwhile, when the external pressure is removed, the valve control member 234 is restored to its original shape to cause the movable valve 232 to move upwards. To this end, the valve control member 234 comprises an elastic member, for example, a spring having a predetermined elastic modulus.

The first chamber 24 is described with reference to FIGS. 4a to 4c. That is, the first chamber 24 defines a space to store compressed air which is fed through the flow control unit 23 provided on the upper portion of the body 28 of the supply unit 2, and further includes a path 241 to feed compressed air to the flow adjusting unit 25, which will be described below in detail.

The path 241 is a compressed air passage which is defined to make the first chamber 24 communicate with a flow supply part 253 of the flow adjusting unit 25, which will be described below in detail.

Referring to FIGS. 4b, 4c, and 4e, the flow adjusting unit 25 includes a flow adjusting valve 251, a protective cap 252, and the flow supply part 253.

The flow adjusting valve 251 includes a head 2511, a flow adjusting rod 2512, an O-ring seat 2513, a fastening part 2514, a coupling part 2515, and a flow adjusting path 2516.

The head 2511 has the shape of a cylinder which extends from a circular surface having a predetermined diameter to a predetermined length.

The flow adjusting rod 2512 has the shape of a truncated cone, one side of which has a diameter smaller than that of the head 2511 and extends from the upper surface of the head 2511 to a predetermined length in such a way as to be tapered in a direction from a lower position to an upper position at a predetermined inclination angle, and the other side of which has a circular cross-section having a predetermined diameter. Referring to FIGS. 4a to 4c, the inserted depth of the flow adjusting rod 2512 is adjusted according to the extent to which it is fastened to the body 28 of the supply unit 2, thus adjusting the open sectional area of the flow adjusting path 2516 communicating with the flow supply part 253, which will be described below in detail. Thereby, the flow adjusting unit 25 supplies compressed air, fed through the path 241 of the first chamber 24, to the flow supply part 253 at a constant flow rate.

The O-ring seat 2513 has the shape of a cylinder which has a diameter smaller than that of the head 2511 and extends from the lower surface of the head 2511 to a predetermined length. Referring to FIG. 4c, the O-ring 2513a is inserted to the O-ring seat 2513, thus preventing compressed air from leaking through a gap between the flow adjusting valve 251 and the body 28 of the supply unit 2.

The fastening part 2514 has the shape of a cylinder which has a diameter larger than that of the O-ring seat 2513 and extends from the lower surface of the O-ring seat 2513 to a predetermined length. A thread is formed on the outer circumferential surface of the lower portion of the fastening part 2514. As shown in FIG. 4c, the lower portion of the thread 2514 engages with the body 28 of the supply unit 2.

The coupling part 2515 has the shape of a cylinder which has a diameter smaller than that of the fastening part 2514 and extends from the lower surface of the fastening part 2514 to a predetermined length. A groove having a predetermined depth is formed on the lower end of the coupling part 2515, so that the coupling part 2515 may be turned using a tool, such as a screwdriver. By adjusting the fastening degree of the fastening part 2514, the sectional area of the tapered flow adjusting rod 2512 is adjusted, so the open sectional area of the flow adjusting path 2516, connected to the flow supply part 253, is adjusted. Thereby, compressed air fed through the path 241 of the first chamber 24 is supplied to the flow supply part 253 at a constant flow rate.

One end of the flow adjusting path 2516 communicates with the path 241 of the first chamber 24, while the other end communicates with the flow supply part 253, which will be described below in detail. Referring to the enlarged view of FIG. 4c, the flow adjusting path 2516 is a compressed air passage which is defined in the body 28 of the supply unit 2 in a cylindrical shape. Meanwhile, according to another embodiment of the invention which is not shown in the drawings, the flow adjusting path 2516 defined in the body 28 of the supply unit 2 may have the shape of a truncated cone so that it is tapered at a predetermined inclination angle. As described above, the sectional area of the flow adjusting path 2516 is adjusted according to the depth of insertion of the flow adjusting rod 2512, thus allowing compressed air to be supplied to the flow supply part 253 at a constant flow rate.

The protective cap 252 is connected to the flow adjusting valve 251, and includes a fastening part 2521, an O-ring seat 2522, and a head 2523.

The fastening part 2521 has the shape of a hollow cylinder having on an outer circumferential surface thereof a thread. An insert hole 2524 having a predetermined diameter extends downwards from the upper surface of the fastening part 2521 to a predetermined length, so that the coupling part 2515 of the flow adjusting valve 251 may be inserted into the insert hole 2524. Referring to FIG. 4c, the fastening part 2521 is fastened to the body 28 of the supply unit 2, thus protecting the flow adjusting valve 251 from the exterior.

The O-ring seat 2522 has the shape of a cylinder which has a diameter smaller than that of the fastening part 2521 and extends from the lower surface of the fastening part 2521 to a predetermined length. Referring to FIG. 4c, the protective cap 252 is fastened to the body 28 of the supply unit 2 while an O-ring 2522a is fitted over the O-ring seat 2522, so that compressed air is prevented from leaking.

The head 2523 has the shape of a nut which has a diameter larger than that of the O-ring seat 2522 and extends downwards from the lower surface of the O-ring seat 2522 to a predetermined length. However, the head 2523 may have a different shape, such as a polygonal shape, as long as the protective cap 252 may be fastened to the body 28 of the supply unit 2 using a tool, such as a spanner.

The insert hole 2524 is formed in the fastening part 2521 and the O-ring seat 2522. The insert hole 2524 has a passage where the coupling part 2515 is movably inserted into the insert hole 2524 to adjust the degree of insertion of the flow adjusting valve 251 into the flow adjusting path 2516, as described above.

Referring to FIGS. 4a and 4b, one side of the flow supply part 253 communicates with the first supply path 26 to discharge compressed air, and the other side includes a pipe conduit 2531 which communicates with the flow adjusting path 2516 to introduce compressed air. Further, although not shown in the drawings, the flow supply part 253 may have a supply path therein to check whether respective components of the liquid level measurement apparatus 1 are correctly operated by injecting a predetermined pressure of air into the supply path without passing through the air supply part 21.

The pipe conduit 2531 is a passage which introduces a constant flow of compressed air, adjusted by the flow adjusting path 2516. In this case, the opening extent of the sectional area of the flow adjusting path 2516 is adjusted by the flow adjusting rod 2512 of the flow adjusting valve 251.

One end of the first supply path 26 communicates with the flow supply part 253 to introduce compressed air, and the other end communicates with the backflow preventing unit 3, which will be described below in detail, to supply the introduced compressed air to the backflow preventing unit 3.

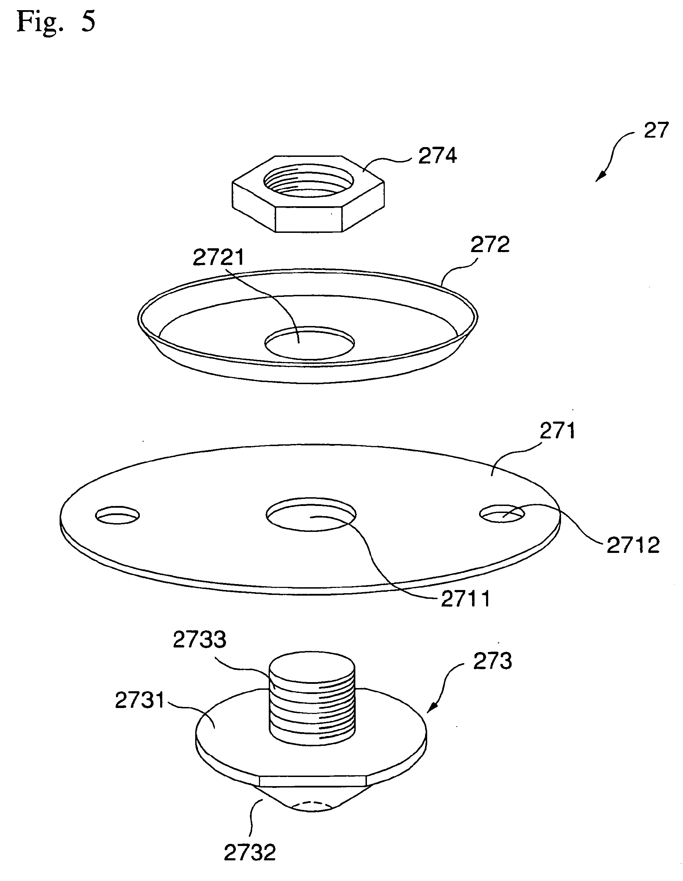

FIG. 5 is an exploded perspective view showing a partitioning unit, according to the present invention.

Referring to FIG. 5, the first partitioning unit 27 includes an elastic body 271, an upper stopper 272, a lower stopper 273, and a nut 274.

The elastic body 271 has the shape of a disc, and is made of a synthetic resin material having flexibility and durability, for example, NBR and NYLON66. The elastic body 271 further includes a fastening hole 2711 and coupling holes 2712.

The fastening hole 2711 is a through hole which is formed through the central portion of the elastic body 271. The fastening hole 2711 defines a passage through which a fastening part 2733 of the lower stopper 273 passes. After the fastening part 2733, passing through the fastening hole 2711, passes through a through hole 2721 formed in the upper stopper 272, the nut 274 is fastened to the fastening part 2733.

The coupling holes 2712 are through holes formed on both sides of the elastic body 27. Referring to FIG. 3, when the liquid level measurement apparatus 1 is operated, the first supply path 26 of the supply unit 2 passes through one coupling hole 2712 formed in one side of the elastic body 27 to communicate with a first inlet path 31 of the backflow preventing unit 3. Further, a coupling path 29 of the supply unit 2 passes through the other coupling hole 2712 formed in the elastic body 27 to communicate with a second supply path 34 of the backflow preventing unit 3 and a second inlet path 41 of the protecting unit 4.

The upper stopper 272 has the shape of a disc having at a central position thereof a through hole 2721 having a predetermined diameter. An outer edge of the disc is upwardly bent to form a sidewall. The upper stopper 272 functions to support the upper surface of the elastic body 271.

The lower stopper 273 supports the lower surface of the elastic body 271, and has a flange 2731, a press part 2732, and the fastening part 2733.

The flange 2731 has the shape of an elliptical disc that extends from an elliptical upper surface to a predetermined length. The upper surface of the flange 2731 contacts the lower surface of the elastic body 271, thus supporting the elastic body 271. Further, the flange 2731 has an elliptical cross-section so that the flange 2731 does not hinder the flow of compressed air and supports the lower surface of the elastic body 271 when the backflow preventing valve 33 is opened during operation of the liquid level measurement apparatus 1, which will be described below in detail. However, the flange 2731 may have a different cross-section, as long as it efficiently performs the above-mentioned function.

The press part 2732 has the shape of a truncated cone, which has a diameter smaller than that of the flange 2731 and extends from the lower surface of the flange 2731 to a predetermined position and is inclined at a predetermined inclination angle. Referring to FIG. 3, when the liquid level measurement apparatus 1 is operated, the press part 2732 moves downwards along with the elastic body 271, thus pressing and opening the backflow preventing valve 33.

The fastening part 2733 has the shape of a cylinder, which has a diameter that is smaller than that of the flange 2731 and is equal to those of the through hole 2721 of the upper stopper 272 and the fastening hole 2711 of the elastic body 271, and extends upwards from the upper surface of the flange 2731 to a predetermined length. A thread is formed on the outer circumferential surface of the fastening part 2733.

The nut 274 is fastened, at the upper surface of the elastic body 271, to the fastening part 2733 passing through the elastic body 271 and the upper stopper 272, so that the components of the first partitioning unit 27, namely, the elastic body 271, the upper stopper 272, and the lower stopper 273, are secured to each other.

Referring to FIG. 3, the coupling path 29 is a compressed air passage, which makes the second supply path 34 of the backflow preventing unit 3 communicate with the second inlet path 41 of the protecting unit 4.

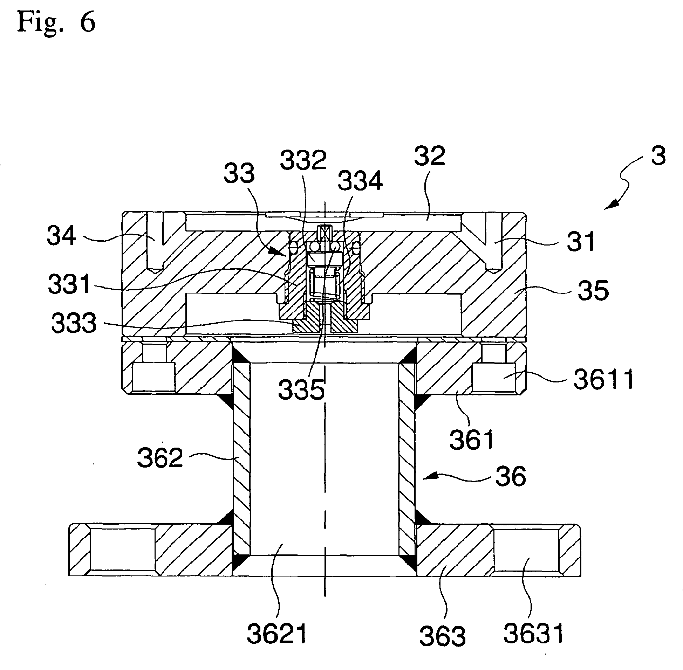

FIG. 6 is a vertical sectional view of the backflow preventing unit, according to the present invention.

Referring to FIGS. 3 and 6, the backflow preventing unit 3 is coupled to the lower surface of the supply unit 2, and includes a first inlet path 31, a third chamber 32, a backflow preventing valve 33, a second supply path 34, and a body 35 that encloses the components. The backflow preventing unit 3 may further include a support unit 36.

The first inlet path 31 is a passage which is connected to the first supply path 26 of the supply unit 2 to feed compressed air into the backflow preventing unit 3.

The third chamber 32 is a space for storing compressed air fed through the first inlet path 31, and is provided on the upper portion of the body 35 of the backflow preventing unit 3.

The backflow preventing valve 33 discharges compressed air, fed from the first inlet path 31 through the third chamber 32, to the tank storing liquid whose level is to be measured, thus measuring the liquid level. Further, in the operation of the liquid level measurement apparatus 1, when compressed air does not flow into the supply unit 2, the backflow preventing valve 33 is closed, thus preventing the liquid stored in the tank from flowing backwards towards the liquid level measurement apparatus 1. The backflow preventing valve 33 includes a valve body 331, a movable valve 332, a support block 333, and a valve control member 334. Since such a construction is the same as that of the flow control unit 23 (see, FIG. 4d) of the supply unit 2, it will not be described herein. The operation of the backflow preventing valve 33 will be described in detail with the operation of the liquid level measurement apparatus 1, which will be described later.

The second supply path 34 is a compressed air passage for measuring a liquid level. That is, the second supply path 34 discharges some of the compressed air fed into the third chamber 32, which exceeds the level of liquid stored in the tank, through the backflow preventing valve 33 to the tank. The second supply path 34 supplies only some of the compressed air, corresponding to the liquid level, through the coupling path 29 of the supply unit 2 and the protecting unit 4 to the measuring unit 5.

Referring to FIGS. 2 and 6, the support unit 36 may be additionally provided on the lower portion of the body 35 of the backflow preventing unit 3, and includes a support body 361, a coupling part 362, and a support base 363.

The support body 361 includes a plurality of fastening members 3611 which are spaced apart from each other by a predetermined interval and are fastened to the lower end of the backflow preventing unit 3.

The coupling part 362 includes a conduit 3621 to feed discharged compressed air into the tank storing the liquid whose level is to be measured, when the backflow preventing unit 3 is opened.

The support base 363 has the shape of a hollow disc which has a through hole communicating with the conduit 3621 of the coupling part 362. The support base 363 is coupled to an end of the coupling part 362 to wholly support the liquid level measurement apparatus 1. As shown in FIG. 2, the support base 363 includes a plurality of fastening members 3631 spaced apart from each other by a predetermined interval, thus allowing the liquid level measurement apparatus 1 to be fastened to another structure using the fastening members 3631.

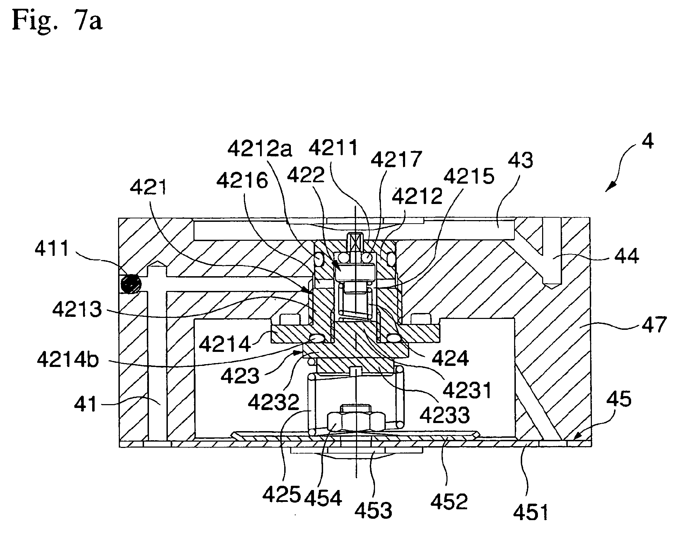

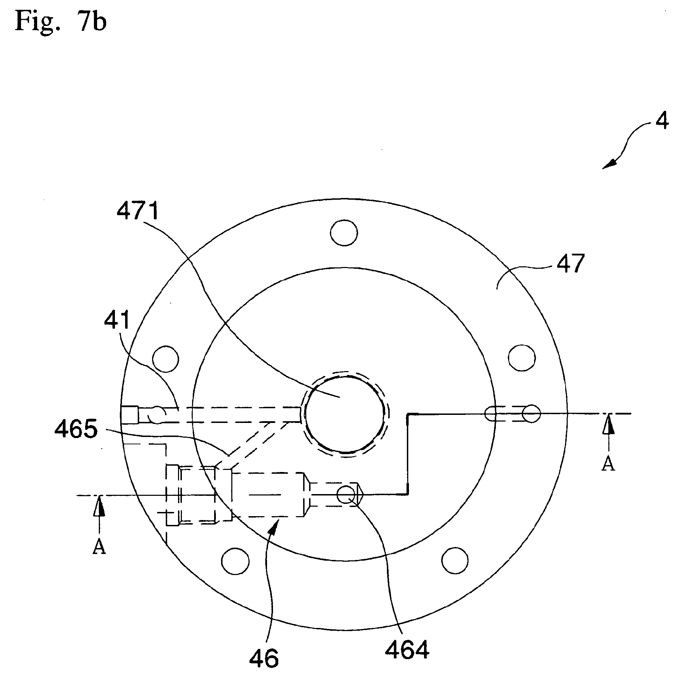

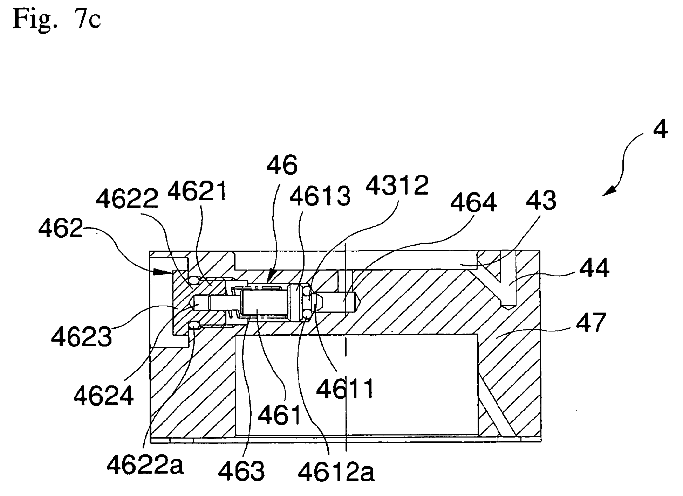

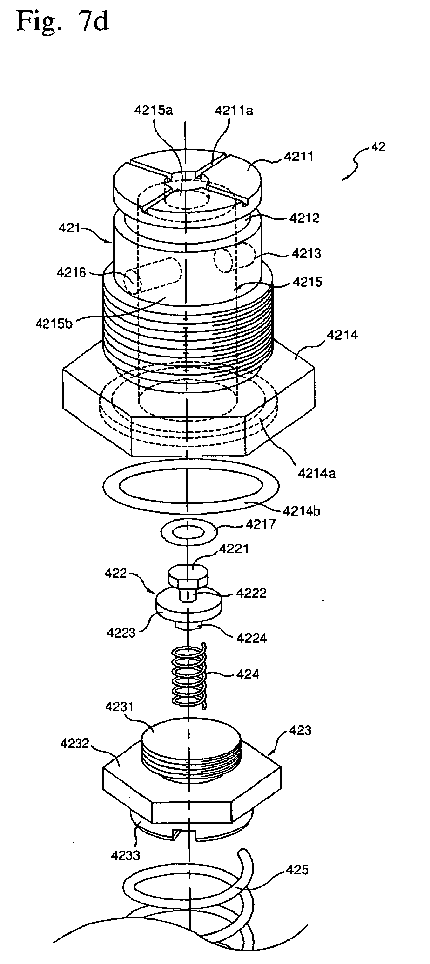

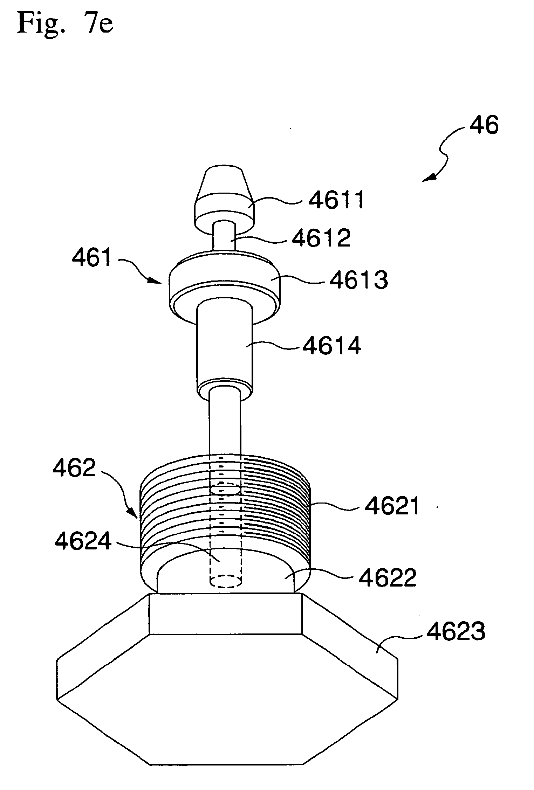

FIG. 7a is a vertical sectional view of the protecting unit, according to the present invention, FIG. 7b is a horizontal projection view of the protecting unit, according to the present invention, FIG. 7c is a sectional view taken along line A-A of FIG. 7b, showing the protecting unit according to the present invention, FIG. 7d is an exploded perspective view showing an overpressure preventing unit of the protecting unit, according to the present invention, and FIG. 7e is a perspective view showing an adhesion preventing unit of the protecting unit, according to the present invention.

In this case, the protecting unit 4 will be described with reference to FIGS. 7a to 7e. The protecting unit 4 includes a second inlet path 41, an overpressure preventing unit 42, a fourth chamber 43, a third supply path 44, a second partitioning unit 45, and a body 47 that encloses the components. The protecting unit 4 may further include an adhesion preventing unit 46.

Referring to FIGS. 3 and 7a, the second inlet path 41 is a compressed air passage, which is vertically formed such that one side thereof communicates with the second supply path 34 of the backflow preventing unit 3 via the coupling path 29 of the supply unit 2 to draw compressed air from the second supply path 34 through the coupling path 29, and the other side of the second inlet path 41 is horizontally formed to be connected to the overpressure preventing unit 42, which will be described below in detail. Meanwhile, while the horizontal passage is formed in the second inlet path 41, a hole is formed in the outer surface of the protecting unit 4. A metal ball 411 having a diameter larger than that of the hole is force-fitted into the hole, thus sealing the protecting unit 4. This simplifies the process for manufacturing the liquid level measurement apparatus 1, and secures the maximum amount of internal space.

The overpressure preventing unit 42 will be described with reference to FIGS. 3, 7a, and 7d. The overpressure preventing unit 42 includes a body 421, an overpressure preventing valve 422, a support block 423, a valve control member 424, and a flow control member 425.

Referring to FIG. 7d, the body 421 includes a flange 4211, an O-ring seat 4212, a fastening cylinder 4213, a tool fitting block 4214, and a moving hole 4215.

The flange 4211 comprises a hollow disc-shaped flange, which allows the overpressure preventing valve 422 to be movable in the body 421 without being removed from the body 421, is opened or closed by an 0-ring 4217, and has a through hole 4215a of a predetermined diameter to be contained in the moving hole 4215. The flange 4211 also includes flow channels 4211a.

Each of the flow channels 4211a is a groove which is formed on the upper surface of the flange 4211 to have a predetermined depth, and is formed to communicate with the through hole 4215a of the moving hole 4215. Further, in the operation of the liquid level measurement apparatus 1, the flow channels 4211a are operated as follows. That is, as shown in FIGS. 3 and 7d, when the overpressure preventing unit 42 is opened, a third partitioning unit 55 moves downwards and closes the through hole 4215a formed in the flange 4211, thus hindering the flow of compressed air. However, even in this case, the smooth flow of the compressed air is ensured. To this end, the flow channels 4211a are provided on the surface of the flange 4211 in cross form to communicate with the through hole 4215a, thus allowing compressed air to smoothly flow. However, the flow channels 4211a may have a different form as long as it allows the smooth flow of compressed air.

The O-ring seat 4212 has a diameter smaller than that of the flange 4211, and extends from the lower surface of the flange 4211 to a predetermined length. Referring to FIG. 7a, an O-ring 4212a is fitted over the O-ring seat 4212, thus preventing compressed air from leaking through a gap between the body 421 and the body 47 of the protecting unit 4.

The fastening cylinder 4213 has the shape of a hollow cylinder which has a diameter larger than that of the O-ring seat 4212, and extends downwards from the lower surface of the O-ring seat 4212 to a predetermined length, with the moving hole 4215 formed in the fastening cylinder 4213. A thread is formed on the outer circumferential surface of the lower portion of the fastening cylinder 4213, and inlet ports 4216 are formed in the upper portion of the fastening cylinder 4213 to communicate with the second inlet path 41 and draw compressed air. Referring to FIG. 7a, the overpressure preventing unit 42 is fastened to a center hole 471 (see, FIG. 7b) formed in the body 47 of the protecting unit 4, using the thread which is formed on the lower portion of the fastening cylinder 4213.

The tool fitting block 4214 has the shape of a hollow cover which has a diameter larger than that of the fastening cylinder 4213, and extends downwards from the lower surface of the fastening cylinder 4213 to a predetermined length. The moving hole 4215 extends from the O-ring seat 4212 along the central axis of the tool fitting block 4214. An internal thread is formed in the inner circumferential surface of the lower end of the tool fitting block 4214. An O-ring seat 4214a having a predetermined diameter is provided on the lower surface of the tool fitting block 4214, so that an O-ring 4214b is seated in the O-ring seat 4214a, thus sealing the gap between the tool fitting block 4214 and the support block 423. The tool fitting block 4214 has the shape of a nut, so that the overpressure preventing unit 42 is fastened to the center hole 471 (see, FIG. 7b) formed in the body 47 of the protecting unit 4 by turning the tool fitting block 4214 using a tool, such as a spanner. However, the tool fitting block 4214 may have various shapes, including a polygonal shape, as long as it performs the above-mentioned function.

The moving hole 4215 is a space which is defined in the body 421 so that compressed air flows when the overpressure preventing unit 42 is opened, and the overpressure preventing valve 422 is movable. The moving hole 4215 includes the through hole 4215a and a guide hole 4215b.

The diameter of the through hole 4215a, formed in the flange 4211, is determined so that the overpressure preventing valve 422 is closed when the O-ring 4217, interposed between the flange 4211 and the overpressure preventing valve 422, is in close contact with the lower surface of the flange 4211.

The guide hole 4215b is a passage for compressed air, which extends from the lower end of the through hole 4215a to the lower surface of the tool fitting block 4214 and has a diameter larger than that of the through hole 4215a. The guide hole 4215b is used as a space for moving the overpressure preventing valve 422, which will be described below in detail, so as to open or close the overpressure preventing unit 42.

The overpressure preventing valve 422 includes a plug 4221, an O-ring seat 4222, a press cylinder 4223, and a support rod 4224. Since the construction of the overpressure preventing valve 422 is the same as that of the movable valve 232 provided on the flow control unit 23 of the supply unit 2, it will not be described in detail herein. The operation of the overpressure preventing valve 422 will be described in detail in the description of the operation of the liquid level measurement apparatus 1.

The support block 423 is secured to the body 421, and includes a fastening shank 4231, a head 4232, and a support part 4233.

The fastening shank 4231 has the shape of a cylinder which has on the outer circumferential surface thereof a thread, and engages with the internal thread formed on the tool fitting block 4214 of the body 421. The upper surface of the fastening shank 4231 supports the valve control member 424.

The head 4232 has the shape of a nut which has a diameter larger than that of the fastening shank 4231, and extends downwards from the lower surface of the fastening shank 4231 to a predetermined length. The head 4232 is in close contact with the tool fitting block 4214 of the body 421, and the leakage of compressed air can be prevented by the O-ring 4214b seated in the O-ring seat 4214a formed on the lower surface of the tool fitting block 4214. Further, the lower surface of the head 4232 supports the flow control member 425, and the head 4232 has the shape of a nut to easily fasten the support block 423 to the body 421 by turning the head 4232 using a tool, such as a spanner. However, the head 4232 may have a different shape, such as a polygonal shape, as long as it allows an easy fastening operation.

The support part 4233 has the shape of a cylinder which has a predetermined diameter and extends downwards from the lower surface of the head 4232 to a predetermined length. The flow control member 425 is fitted over the support part 4233 to be secured to the support part 4233.

Since the valve control member 424 has the same construction as that of the flow control member 234 provided on the flow control unit 23 of the supply unit 2, the construction of the valve control member 424 will not be described in detail herein. The operation of the valve control member 424 will be described in detail in the description of the operation of the liquid level measurement apparatus 1.

Referring to FIGS. 7a and 7d, the flow control member 425 comprises an elastic member which is contracted by a predetermined external pressure and is restored to its original shape when the external pressure is removed. The flow control member 425 is secured to the support part 4233 of the support block 423 to be supported by the lower surface of the head 4232 and the second partitioning unit 45, which will be described below in detail. Referring to FIG. 3, the flow control member 425 may comprise a member, for example, a spring having a predetermined elastic modulus. That is, in the operation of the liquid level measurement apparatus 1, when compressed air does not flow into the supply unit 2 or when compressed air having a pressure lower than a predetermined pressure flows into the supply unit 2, the member overcomes the air pressure and presses down the second partitioning unit 45. Meanwhile, when compressed air, having an excessive pressure exceeding a predetermined pressure, flows into the supply unit 2, the member is upwardly compressed by the second partitioning unit 45.

The fourth chamber 43 is a space defined in the upper portion of the body 47 of the protecting unit 4 to store compressed air which flows through the overpressure preventing valve 422 of the overpressure preventing unit 42, when the overpressure preventing valve 422 is opened.

The third supply path 44 is a compressed air passage which is used to supply compressed air fed into the fourth chamber 43 to the measuring unit 5, which will be described below.

The second partitioning unit 45 includes an elastic body 451, an upper stopper 452, a lower stopper 453, and a nut 454. Since the construction of the second partitioning unit 45 is the same as that of the first partitioning unit 27 of the supply unit 2 which has been described hereinbefore, the construction will not be described herein. The operation of the second partitioning unit 45 will be described in detail in the description of the operation of the liquid level measurement apparatus 1.

Referring to FIGS. 7b, 7c, and 7e, the adhesion preventing unit 46 includes an adhesion preventing valve 461, a protective cap 462, and a valve control member 463. Further, a first path 464 is connected to one side of the adhesion preventing unit 46 to communicate with the fourth chamber 43, and a second path 465 is connected to another side of the adhesion preventing unit 46 to communicate with the second inlet path 41. Referring to FIG. 3, in the operation of the liquid level measurement apparatus 1, when overpressurized compressed air flows into the apparatus, the overpressurized compressed air fed into components other than the fourth chamber 43 is discharged through the backflow preventing unit 3 to the tank, and is thus eliminated. However, overpressurized compressed air fed into the fourth chamber 43 cannot be discharged, so that the O-ring 4217, inserted between the overpressure preventing valve 422 of the overpressure preventing unit 42 and the flange 4211 of the overpressure preventing unit 42, comes into close contact with the upper surface of the flange 4211. In such a state, when a lengthy period has elapsed, the O-ring 4217 may be adhered to the upper surface of the flange 4211 and may not be moved. Thus, the adhesion preventing unit 46 discharges overpressurized compressed air fed into the fourth chamber 43, thus automatically restoring the overpressure preventing unit 42, therefore preventing the flange 4211, the overpressure preventing valve 422, and the O-ring 4217 from adhering to each other.

Referring to FIG. 7e, the adhesion preventing valve 461 includes a valve head 4611, an 0-ring seat 4612, a support flange 4613, and a coupling cylinder 4614.

Referring to FIGS. 7c and 7e, the valve head 4611 has a disc-shaped part which extends upwards from a circular surface having a predetermined diameter to a predetermined length, and a truncated conical part which extends from the upper surface of the disc-shaped part to a predetermined length in such a way as to be tapered at a predetermined inclination angle. The diameter of the disc-shaped part is determined so that the disc-shaped part may be inserted into the first path 464.

The O-ring seat 4612 has the shape of a cylinder which has a diameter smaller than that of the valve head 4611 and extends downwards from the lower surface of the valve head 4611 to a predetermined length. An O-ring 4612a is fitted over the O-ring seat 4612 to seal a gap between the adhesion preventing valve 461 and the body 47 of the protecting unit 4, thus closing the first path 464.

The support flange 4613 has the shape of a disc which has a diameter larger than that of the O-ring seat 4612 and extends downwards from the O-ring seat 4612 to a predetermined length. The upper surface of the support flange 4613 supports the O-ring 4612a (see, FIG. 7c) fitted over the 0-ring seat 4612, and the lower surface of the support flange 4613 supports the valve control member 463, which will be described below in detail. When the liquid level measurement apparatus 1 is operated, the support flange 4613 brings the O-ring 4612a, fitted over the O-ring seat 4612 by the valve control member 463, into close contact with the body 47 of the protecting unit 4, thus sealing the first path 464. Alternatively, the support flange 4613 separates the 0-ring 4612a from the body 47 of the protecting unit 4, thus allowing compressed air to flow through the first path 464.

The coupling cylinder 4614 has the shape of a multi-stage cylinder. That is, the upper portion of the coupling cylinder 4614 has a diameter smaller than that of the support flange 4613 and extends downwards from the lower surface of the support flange 4613 to a predetermined length, and the lower portion of the cylinder has a diameter smaller than that of the upper portion and extends to a predetermined length. The lower portion of the coupling cylinder, having a reduced diameter, may be coupled to the protective cap 462, which will be described below in detail.

The protective cap 462 protects the adhesion protecting valve 461 from the exterior, and includes a fastening part 4621, an O-ring seat 4622, a cap head 4623, and an insert hole 4624.

The fastening part 4621 has the shape of a hollow cylinder which has on an outer circumferential surface thereof a thread, and a through hole formed in the cylinder so that the coupling cylinder 4614 is movable in the through hole. The fastening part 4621 may be fastened to the body 47 of the protecting unit 4 using the thread. The upper surface of the fastening part 4621 supports the valve control member 463, which will be described below in detail.

The O-ring seat 4622 has a diameter smaller than that of the fastening part 4621, and extends downwards from the lower surface of the fastening part 4621 to a predetermined length. The O-ring 4622a (see, FIG. 7c) is fitted over the O-ring seat 4622, thus sealing the gap between the protective cap 462 and the body 47 of the protecting unit 4.

The cap head 4623 has the shape of a nut which has a diameter larger than that of the O-ring seat 4622 and extends downwards from the lower surface of the O-ring seat 4622 to a predetermined length. However, the cap head 4623 may have a different shape, such as a polygonal shape, as long as the protective cap 462 can be fastened to the body 47 of the protecting unit 4 using a tool, such as a spanner.

The insert hole 4624 is formed in the fastening part 4621 and the 0-ring seat 4622, so that the coupling cylinder 4614 can be inserted into the insert hole 4624. Thereby, when the liquid level measurement apparatus 1 is operated, the insert hole 4624 defines a passage in which the adhesion preventing valve 461 is movable by the hydraulic pressure of compressed air fed into the protecting unit 4.

Referring to FIG. 7c, the valve control member 463 comprises an elastic member which may be contracted or extended by a predetermined external pressure. The valve control member 463 is supported by the lower surface of the support flange 4613 and the upper surface of the cap head 4623. Preferably, the valve control member 463 comprises a member which has a predetermined elastic force and is sensitive to pressure. Thereby, in the operation of the liquid level measurement apparatus 1, which will be described below in detail, when overpressurized compressed air is fed into the fourth chamber 43 and the overpressurized compressed air fed into the second path 465 (see, FIG. 7b) is discharged through the backflow preventing valve 3, the member may be compressed by the pressure difference between the fourth chamber 43 and the second path 465 (see, FIG. 7b).

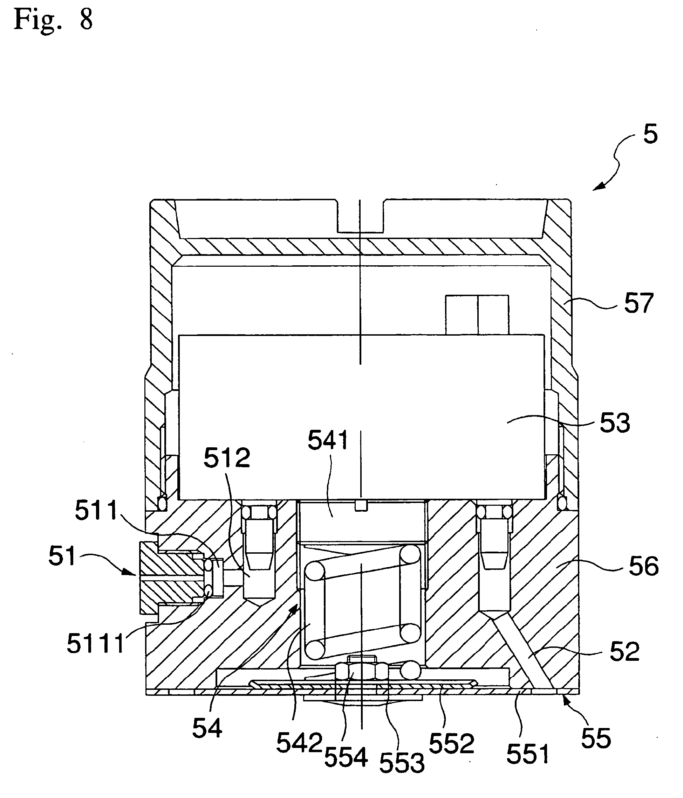

FIG. 8 is a vertical sectional view showing the measuring unit, according to the present invention.

The measuring unit 5 will be described below with reference to FIGS. 3 and 8. The measuring unit 5 includes an opening 51, a third inlet path 52, a measured value converting part 53, an overpressure control part 54, a third partitioning unit 55, and a body 56 enclosing the components. The measuring unit 5 may also include a cover 57.

The opening 51 is a passage which communicates with the exterior and transmits atmospheric pressure. A filter 511 and a pipe conduit 512 are provided in the opening 51.

The filter 511 is a moisture removal filter which is coupled to one side of the opening 51 provided on the measuring unit 5 and prevents moisture from entering the measured value converting part 53, which will be described below in detail. Further, an O-ring 5111 may be inserted to seal the gap between the filter 511 and the body 56 of the measuring unit 5.

One side of the pipe conduit 512 horizontally communicates with the filter 511, while the other side of the pipe conduit 512 vertically communicates with the measured value converting part 53. Such a configuration has a double waterproofing effect. That is, even when some of liquid which is not filtered by the filter 511 flows into the pipe conduit 512, the other side of the conduit 512, vertically communicating with the measured value converting part 53, prevents moisture from entering the measured value converting part 53.

The third inlet path 52 is connected to the third supply path 44 of the protecting unit 4 to introduce compressed air, and supplies the introduced compressed air to the measured value converting part 53, which will be described below in detail.

The measured value converting part 53 compares the hydraulic pressure of the compressed air, fed through the third inlet path 52, with the atmospheric pressure acting through the opening 51, thus measuring the level of the liquid stored in the tank. Although not shown in the drawings, the measured value converting part 53 compares the hydraulic pressure of the compressed air corresponding to the level of the liquid stored in the tank with the atmospheric pressure, and converts the pressure difference into an electric signal. Thereafter, a liquid level value calculated according to a predetermined equation is transmitted to a remote-controlled computer and displayed on a display.

The overpressure control part 54 controls the on/off operation of the protecting unit 4, according to the pressure acting on the protecting unit 4, and includes a compression adjusting part 541 and an overpressure control member 542.

The compression adjusting part 541 has the shape of a cylinder having on an outer circumferential surface thereof a thread. The compression adjusting part 541 is fastened to the body 56 of the measuring unit 5, and adjusts the degree of compression of the overpressure control member 542 which will be described below in detail, to correspond to the extent to which the compression adjusting part 541 is fastened.

The overpressure control member 542 comprises an elastic member which is contracted by external pressure and is restored to its original shape when the external pressure is eliminated. The overpressure control member 542 is supported by the lower surface of the compression adjusting part 541 and the third partitioning unit 55, which will be described below in detail. Referring to FIG. 3, the overpressure control member 542 may comprise a member having a predetermined elastic force, for example, a spring having a predetermined elastic modulus. That is, in the operation of the liquid level measurement apparatus 1, which will be described below in detail, when compressed air does not flow into the protecting unit 4, or compressed air having a pressure lower than a predetermined pressure flows into the protecting unit 4, the member presses the third partitioning unit 55 downwards. Meanwhile, when overpressure compressed air exceeding a predetermined pressure flows into the protecting unit 4, the member is compressed upwards by the third partitioning unit 55 which moves upwards.

The third partitioning unit 55 includes an elastic body 551, an upper stopper 552, a lower stopper 553, and a nut 554. Since the construction of the third partitioning unit 55 is the same as that of the first partitioning unit 27 of the supply unit 2, the construction will not be described herein. The operation of the third partitioning unit 55 will be described in detail in the description of the operation of the liquid level measurement apparatus 1.

The cover 57 may be additionally provided to protect the components installed in the measuring unit 5 from the exterior. An O-ring may be inserted at the junction between the cover 57 and the body of the measuring unit 5.

According to another embodiment of the present invention, the liquid level measurement apparatus 1 may further include a cable support body, although this is not shown in the drawings. The cable support body supports a cable which is connected to the measured value converting part 53 of the measuring unit 5 to supply power, and transmits a signal, that is, a current value that is converted from the level of the liquid stored in the tank by the measured value converting part 53.

Hereinafter, the operation of the liquid level measurement apparatus 1 constructed as described above will be described in detail with reference to the accompanying drawings.

First, when compressed air is not supplied to the supply unit 2, the state of the liquid level measurement apparatus 1 will be described with reference to FIG. 3.

In the supply unit 2, the flow control member 425, which is provided on the overpressure preventing unit 42 of the protecting unit 4, moves down the second partitioning unit 45 and presses down the movable valve 232 of the supply unit 2, thus compressing the valve control member 234. Thereby, the flow control unit 23 of the supply unit 2 is opened.

In the backflow preventing unit 3, since no external pressure acts on the first partitioning unit 27, the first partitioning unit 27 is spaced apart from the movable valve 332 provided on the backflow preventing valve 33 of the backflow preventing unit 3, so the movable valve 332 is not pressed. The movable valve 332 is brought into close contact with the lower surface of the body 331 through the O-ring 335 by the valve control member 334, thus closing the backflow preventing valve 33. Thereby, backflow of the liquid stored in the tank is prevented, thus protecting the internal components of the liquid level measurement apparatus 1.

In the protecting unit 4, the overpressure control member 542, provided on the overpressure control part 54 of the measuring unit 5, moves down the third partitioning unit 55 and presses down the overpressure preventing valve 422 of the protecting unit 4, thus compressing the valve control member 424. Thereby, the overpressure preventing unit 42 of the protecting unit 4 is opened.

Hereinafter, when compressed air having a pressure lower than a predetermined pressure is supplied to the supply unit 2, the operation of the liquid level measurement apparatus 1 will be described with reference to FIG. 3.

The flow control unit 23 of the supply unit 2 is opened, as in the case where compressed air is not fed into the supply unit 2. After the compressed air is filtered by the filter 211 (see, FIG. 4c) provided on the air supply part 21 (see, FIG. 4c) of the supply unit 2, the compressed air is fed into the second chamber 22. Subsequently, the compressed air flows through the flow control unit 23 to the first chamber 24. The compressed air fed into the first chamber 24 flows through the path 241 (see, FIG. 4c) to the flow adjusting path 2516 (see, a partial enlarged view of FIG. 4c). The flow adjusting unit 25 (see, FIG. 4c) adjusts the extent of opening of the flow adjusting path 2516 (see, a partial enlarged view of FIG. 4c), thus supplying a constant amount of compressed air through the pipe conduit 2531 (see, FIG. 4b) to the flow supply part 253. The flow supply part 253 supplies the compressed air through the first supply path 26 to the backflow preventing unit 3.

In this case, the compressed air fed and stored in the second chamber 22 presses the first partitioning unit 27 to move it down. The first partitioning unit 27 presses the movable valve 332 provided on the backflow preventing valve 33 of the backflow preventing unit 3, thus compressing the valve control member 334 with a force which is stronger than the elastic force of the valve control member 334 of the backflow preventing valve 33. Thereby, the O-ring 335 interposed between the movable valve 332 of the backflow preventing valve 33 and the body 331 is spaced apart from the lower surface of the body 331, so the backflow preventing valve 33 is opened.

In the backflow preventing unit 3, the compressed air discharged from the first supply path 26 of the supply unit 2 is fed through the first inlet path 31 to the third chamber 32. The compressed air fed into the third chamber 32 sequentially passes through the backflow preventing valve 33, which is opened as described above, and the conduit 3621 provided in the coupling part 362 of the support unit 36, prior to flowing to the tank. An amount of compressed air exceeding the level of the liquid stored in the tank is discharged from the tank. Only an amount of compressed air corresponding to the level of the liquid is supplied through the second supply path 34 to the protecting unit 4.

The compressed air, discharged from the second supply path 34 of the backflow preventing unit 3, passes through the coupling path 29 of the supply unit 2 and the second inlet path 41, and flows to the protecting unit 4. Since the hydraulic pressure of the introduced compressed air is weaker than the elastic force of the overpressure control member 542 of the measuring unit 5, the overpressure preventing unit 42 of the protecting unit 4 is opened, as in the case where compressed air is not fed into the supply unit 2. Thereby, the compressed air flows through the fourth chamber 43 and the third supply path 44 to the measuring unit 5.

In the measuring unit 5, the hydraulic pressure of the compressed air supplied through the third supply path 44 of the protecting unit 4 and the hydraulic pressure corresponding to the atmospheric pressure applied to the opening 51 are transmitted to the measured value converting part 53. The measured value converting part 53 compares and calculates both of the hydraulic pressures, thus measuring the level of the liquid stored in the tank.

Next, when compressed air having an overpressure exceeding a predetermined pressure is supplied to the supply unit 2, the operation of the liquid level measurement apparatus 1 will be described with reference to FIG. 3.

When the flow control unit 23 of the supply unit 2 is opened as described above and the overpressurized compressed air is supplied to the flow control unit 23, the overpressurized compressed air is transmitted through the flow control unit 23 to the first chamber 24. The hydraulic pressure of the compressed air is stronger than the elastic force of the flow control member 425 provided on the overpressure preventing unit 42, which acts to press down the second partitioning unit 45 of the protecting unit 4, thus making the second partitioning unit 45 move upwards. Thereby, the second partitioning unit 45 is spaced apart from the movable valve 232 of the flow control unit 23, and the movable valve 232 is moved upwards by the valve control member 234 of the flow control unit 23, so that the 0-ring 2325 is in close contact with the body 231 and the flow control unit 23 is closed.

Since the overpressurized compressed air flowing into the supply unit 2 is fed to the third chamber 32 of the backflow preventing unit 3, and the hydraulic pressure is equal to that of the compressed air stored in the second chamber 22 of the supply unit 2, the backflow preventing valve 33 of the backflow preventing unit 3 remains open.

The overpressurized compressed air fed to the supply unit 2 sequentially passes through the backflow preventing unit 3 and the supply unit 2, and then flows to the protecting unit 4. Thus, during such a process, the hydraulic pressure of the compressed air may be reduced to some extent.

When the compressed air is fed into the protecting unit 4, it is supplied through the overpressure preventing unit 42 of the protecting unit 4 to the fourth chamber 43. The compressed air moves the third partitioning unit 55 upwards with a force which is stronger than the elastic force of the overpressure control member 542, which pushes the third partitioning unit 55 of the measuring unit 5 downwards. Thus, the third partitioning unit 55 is spaced apart from the overpressure preventing valve 422 of the overpressure preventing unit 42, so the overpressure preventing valve 422 is moved upwards by the elastic force of the valve control member 424. Thereby, the O-ring 4217 is in close contact with the lower surface of the body 421, thus closing the overpressure preventing unit 42.

As soon as overpressurized compressed air is fed into the supply unit 2, the flow adjusting unit 23 of the supply unit 2 and the overpressure preventing unit 42 of the protecting unit 4 are closed. Thus, only a small amount of compressed air is transmitted to the measuring unit 5. Further, an even smaller amount of compressed air is shunted through the third supply path 44 of the protecting unit 4. Thus, during such a process, some of the hydraulic pressure of the compressed air may be eliminated, so that the measured value converting part 53 can be efficiently protected from overpressure.

Further, the operation of the adhesion preventing unit 46 of the protecting unit 4 will be described with reference to FIGS. 7b and 7c. That is, overpressurized compressed air fed to the protecting unit 4 is supplied through the second path 465, coupled to the second inlet path 41, to the adhesion preventing unit 46. The hydraulic pressure of the compressed air is greater than that of the valve control member 463 of the adhesion preventing unit 46, so that the adhesion preventing valve 461 is in close contact with the body 47 of the protecting unit 4 together with the O-ring 4612a. Thereby, overpressure compressed air does not flow through the first path 464 to the fourth chamber 43.

Hereinafter, when overpressurized compressed air flows into the apparatus, so the flow control unit 23 and the overpressure preventing unit 42 are closed, the operation of the adhesion preventing unit 46 of the protecting unit 4 will be described with reference to FIGS. 3, 7b, and 7c.

As described above, when overpressurized compressed air flows into the apparatus and the flow control unit 23 of the supply unit 2 and the overpressure preventing unit 42 of the protecting unit 4 are closed, the overpressurized compressed air is discharged through the backflow preventing valve 33 of the backflow preventing unit 3 to the tank. Thus, the hydraulic pressure, which acts to move up the second partitioning unit 45 closing the flow control unit 23, is removed, so the second partitioning unit 45 is moved downwards by the restoring force of the flow control member 425 of the overpressure preventing unit 42, thus pressing the movable valve 232 of the flow control unit 23. Thereby, the flow control unit 23 is opened.

Since the fourth chamber 43 is closed, some of the overpressurized compressed air fed into the overpressure preventing unit 42 may not be discharged. Thus, the overpressure preventing valve 422 of the overpressure preventing unit 42 and the O-ring 4217 are in close contact with the body 421 of the overpressure preventing unit 42. In such a state, after an elapse of a lengthy period, the overpressure preventing valve 422 and the O-ring 4217 may adhere to the body 421. However, the overpressure preventing unit 42 is automatically restored to its original position through the adhesion preventing unit 46.

That is, the adhesion preventing unit 46 is connected to the fourth chamber 43 through the first path 464. Thus, as described above, the overpressurized compressed air fed into components other than the fourth chamber 43 is discharged through the backflow preventing unit 3 to the tank and is eliminated. Thereby, the hydraulic pressure of the compressed air fed through the first path 464 is stronger than the elastic force of the valve control member 463 provided on the adhesion preventing unit 46, thus compressing the valve control member 463. Hence, the adhesion preventing valve 461 and the O-ring 4622a are spaced apart from the body 47 of the protecting unit 4, so that the overpressurized compressed air fed into the fourth chamber 43 is discharged. Therefore, the third partitioning unit 55 is moved downwards by the overpressure control member 542 and presses the overpressure preventing valve 422 of the overpressure preventing unit 42. Thereby, the overpressure preventing unit 42 is opened.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

The present invention having the construction and operation described above accomplishes the following effects.

The present invention provides a liquid level measurement apparatus for measuring the level of liquid stored in a tank, which has an integrated structure, thus simplifying the overall construction, therefore being easy to manufacture.

The present invention provides a liquid level measurement apparatus, in which, when overpressurized compressed air flows into the apparatus, the compressed air is shunted to a unit for measuring the level of liquid, so that some of the hydraulic pressure is eliminated, thus damage caused by the inflow of the overpressure compressed air is more efficiently prevented.

The present invention provides a liquid level measurement apparatus, which uses O-rings as means for opening or closing respective components, thus simplifying the construction, therefore being easy to manufacture, and more efficiently closing the components.

The present invention provides a liquid level measurement apparatus, which is made of a special synthetic resin material having flexibility and durability as a means for applying external pressure to open or close respective components, thus being usable for a lengthy period of time.

The present invention provides a liquid level measurement apparatus, which is constructed so that holes defined by forming paths that communicate respective components with each other are closed using metal balls through a force-fitting method, thus simplifying a manufacturing process, therefore affording ease of manufacture and ensuring sufficient internal space.

The present invention provides a liquid level measurement apparatus, which is constructed so that a filter is secured to an air supply means without using an additional mounting component, thus simplifying a construction, and affording ease of manufacture, and which places a protective cap equipped with an O-ring on each component coupled to the exterior, thus safely protecting the internal components from the exterior.

The present invention provides a liquid level measurement apparatus, in which a channel is further provided in a component for controlling the flow of the compressed air, thus causing compressed air to flow more smoothly, and in which a filter is provided on a passage communicating with the atmosphere and the passage is perpendicularly formed, thus achieving a double waterproofing effect, therefore efficiently and safely protecting internal components.

## Claims

1. A liquid level measurement apparatus, comprising:
a supply unit (2), which is closed when compressed air flows into the supply unit (2) and pressure of the compressed air exceeds a predetermined pressure, and which is opened when the pressure of the compressed air is below the predetermined pressure, the supply unit (2) controlling so that the compressed air flows at a constant flow rate when the supply unit (2) is opened;
a backflow preventing unit (3) controlled according to whether the compressed air flows into the supply unit 2, the backflow preventing unit (3) being opened and connected to a tank storing liquid when the compressed air flows into the supply unit (2), and being closed when the compressed air does not flow into the supply unit (2), thus preventing the liquid whose level is to be measured from flowing backward from the tank;
a protecting unit (4), which is closed when the compressed air fed through the supply unit (2) flows through the backflow preventing unit (4) and the pressure of the compressed air exceeds the predetermined pressure, and which is opened when the pressure of the compressed air is below the predetermined pressure, thus permitting the compressed air to flow the protecting unit (4) opening or closing the supply unit (2) depending on the pressure of the compressed air fed into the supply unit (2); and
a measuring unit (5) opening or closing the protecting unit (4) depending on the pressure of the compressed air fed into the protecting unit (4) and drawing the compressed air from the protecting unit (4) when the protecting unit (4) is open, and thereafter comparing the pressure of the compressed air with atmospheric pressure, and calculating the pressure of the compressed air, thus measuring a level of the liquid stored in the tank, wherein
the supply unit (4) comprises:
an air supply part (21) to draw the compressed air;
a second chamber (22) to store the compressed air fed from the air supply part (21);
a flow control unit (23) which is opened or closed depending on the pressure of the compressed air fed through the air supply part (21);
a first chamber (24) to store the compressed air fed through the flow control unit (23);
a flow adjusting unit (25) to adjust a flow rate of the compressed air fed from the first chamber (24), prior to supplying the compressed air;
a first supply path (26) to discharge the compressed air fed through the flow adjusting unit (25); and
a first partitioning unit (27) controlled and moved depending on the pressure of the compressed air stored in the second chamber (22),
the backflow preventing unit (3) comprises:
a first inlet path (31) to draw the compressed air through the first supply path (24);
a third chamber (32) to store the compressed air fed from the first inlet path (31); and
a backflow preventing valve (33) controlled by the first partitioning unit (27) of the supply unit (2) so as to be opened or closed,
a second supply path (34) to discharge some of the
compressed air stored in the third chamber (32).
the protecting unit (4) comprises:
an overpressure preventing unit (42);
a second inlet path (34) to draw the compressed air fed through the second supply path (34); and
the overpressure preventing unit (42) opened or closed depending on the pressure of the compressed air fed from the second inlet path (34);
a fourth chamber (43) to store the compressed air fed through the overpressure preventing unit (43);
a third supply path (44) to discharge the compressed air stored in the fourth chamber (43);
a flow control member (425) and a second partitioning unit (45) to control the flow control unit (23) of the supply unit (2), and
the measuring unit (5) comprises:
a third inlet path (52) to draw the compressed air through the third supply path (52);
an opening (51) serving as a passage that communicates with an atmosphere;
a measured value converting part (53) to compare atmospheric pressure detected through the opening with pressure of the compressed air fed through the third inlet path (52), thus calculating the pressure of the compressed air
and measuring the level of the liquid;
an overpressure control part (54) and a third partitioning unit (55) to control the overpressure preventing unit (42) of the protecting unit (4),
**characterized in that** the backflow preventing unit comprises a second supply path (34) to discharge some of the compressed air stored in the third chamber (32) and the protecting unit comprises a second inlet path (34) to draw the compressed air fed through the second supply path (34); and the overpressure preventing unit (42) opened or closed depending on the pressure of the compressed air fed from the second inlet path (34).

2. The liquid level measurement apparatus as set forth in claim 1, wherein
the flow control unit (23) comprises:
a hollow body (231) fastened to the supply unit;
a hollow support block (233) fastened to the body (231), with a through hole being formed at a predetermined position in the support block (233) to draw air;
a movable valve (232) to control a flow of compressed air in the body (231);
an O-ring (2325) to open or close the flow control unit (23), according to movement of the movable valve (232);
a valve control member (234) supported between a lower end of the movable valve (232) and an upper end of the support block (233), and controlling movement of the movable valve (232), and
an O-ring (2513a) to prevent the compressed air from leaking from between the supply unit (2) and the body (231),
the backflow preventing valve (33) comprises:
a hollow body (331) fastened to the backflow preventing unit (3);
a hollow support block (333) fastened to the body (331), with a through hole formed at a predetermined position in the support block to draw air;
a movable valve (332) to control a flow of compressed air in the body (331);
an O-ring (335) to open or close the backflow preventing valve, according to movement of the movable valve;
a valve control member (334) supported between a lower end of the movable valve (332) and an upper end of the support block (333), and controlling movement of the movable valve (332); and
an O-ring to prevent the compressed air from leaking from between the backflow preventing unit (3) and the body (331), and
the overpressure preventing unit (42) comprises:
a hollow body (421) having on a sidewall thereof an inlet port that communicates with the second inlet path (34) to draw compressed air, the compressed air fed into the inlet port circulating in the body;
an overpressure preventing valve (422) movably provided in the body (421), and opening or closing the overpressure preventing unit (42);
an O-ring (4217) to open or close the overpressure preventing unit (42) by movement of the overpressure preventing valve (422);
a valve control member to control the movement of the overpressure preventing valve (422);
a support block (423) to support the valve control member (424);
an O-ring (4212a) to prevent the compressed air from leaking from between the protecting unit (4) and the body (421); and
a flow control member (425) connected to a lower end of the support block (423) and supported by an upper surface of the second partitioning unit (45), the flow control member (425) controlling movement of the second partitioning unit, according to pressure of the compressed air stored in the first chamber (24).

3. The liquid level measurement apparatus as set forth in claim 2, wherein the body (231) of the flow control unit (23) further comprises a flow channel (2311a) which has a predetermined depth and is provided on an upper surface of the body (231) contacting the movable valve (232) to allow the compressed air to smoothly flow when the flow control unit (23) is opened, and
each of the backflow preventing valve (33) and the overpressure preventing unit (42) comprises, on an upper surface of the body thereof, a flow channel (4211a) to perform the same function as the flow channel (2311a) of the flow control unit (23).

4. The liquid level measurement apparatus as set forth in claim 1, wherein the air supply part (21) further comprises:
a moisture removal filter (211) provided at an end of the air supply part (21), and filtering the fed compressed air to supply pure air; and
an O-ring (212) provided between the filter 211) and the air supply part (21) and preventing the compressed air from leaking out.

5. The liquid level measurement apparatus as set forth in claim 4, wherein the moisture removal filter (211) comprises a mounting flange (2111) such that the filter (211) is mounted to the air supply part (21) through fitting without
using an additional mounting component.

6. The liquid level measurement apparatus as set forth in claim 1, wherein the flow adjusting unit (25) further comprises:
a flow supply part (253) to communicate with the first supply path (26);
a flow adjusting valve (251) to adjust an amount of compressed air supplied to the flow supply part (253); and
an O-ring (2513a) and a protective cap (252) to prevent the compressed air from leaking from between the flow adjusting unit (25) and the supply unit (2).

7. The liquid level measurement apparatus as set forth in claim 6, wherein the flow adjusting valve (251) is tapered towards one end in such a way as to be inclined,
and to adjust a sectional area of a flow adjusting path (2516) that makes the first chamber (24) and the flow supply part (253) communicate each other, thus adjusting a flow rate of compressed air supplied to the flow supply part (253).

8. The liquid level measurement apparatus as set forth in claim 2, wherein the overpressure control part (54) comprises:
an overpressure control member supported by an upper surface of the third partitioning unit (55), and controlling movement of the third partitioning unit (55), depending on the pressure of the compressed air fed into the fourth chamber (43); and
a compression adjusting part (541) connected to an upper surface of the overpressure control member (542), and fastened to the measuring unit (5), thus adjusting a pressure to which the overpressure control member (542) responds, according to the fastening degree thereof.

9. The liquid level measurement apparatus as set forth in claim 1, wherein the measuring unit (5) further comprises:
a cover (57) to protect internal components from an exterior, and sealed by inserting an O-ring at a junction of the cover (57) and the measuring unit (5).

10. The liquid level measurement apparatus as set forth in claim 6, wherein the flow supply part (253) further comprises a supply path for checking whether the components are operating correctly, by injecting a predetermined pressure of air into the first supply path (26) without passing the air through the air supply part (21).

11. The liquid level measurement apparatus as set forth in claim 8, wherein the protecting unit (4) further comprises:
an adhesion preventing unit communicating with the second inlet path (34) and the fourth chamber (43) and discharging compressed air therethrough so as to prevent an O-ring (4217), which is connected to the overpressure preventing valve (422) and opens or closes the overpressure preventing unit (43) when overpressure acts on an interior of the protecting unit (4) and the overpressure preventing unit (43) is closed, from adhering to the body of the overpressure preventing unit (43), so that the overpressure control member moves the overpressure preventing valve (422) through the third partitioning unit (55).

12. The liquid level measurement apparatus as set forth in claim 11, wherein the adhesion preventing unit (46) comprises:
an adhesion preventing valve (461) to control connection between the adhesion preventing unit (48) and the fourth chamber (43);
a valve control member (463) to control movement of the adhesion preventing valve (461);
a protective cap (462) to support the valve control member (463) and protect the adhesion preventing valve (461) from an exterior, with an insert hole (4624) formed in the protective cap (462) so that the adhesion preventing valve (461) is movably inserted into the insert hole (4624);
an o-ring (4612a) to open or close the adhesion preventing unit (46) by movement of the adhesion preventing valve (461) and
an o-ring (4622a) to form a seal between the protective cap (462) and the protecting unit (4).

13. The liquid level measurement apparatus as set forth in claim 1, wherein
the first partitioning unit (27) further comprises:
an elastic body (271) made of a synthetic resin material having flexibility and durability;
an upper stopper (272) to support an upper surface of the elastic body (271); and
a lower stopper (273) to support a lower surface of the elastic body (271), and
each of the second and third partitioning units (45,55) further comprises an elastic body (271) of the same material as that of the first partitioning unit (27), an upper stopper, and a lower stopper.

14. The liquid level measurement apparatus as set forth in claim 13, wherein the synthetic resin material from which the elastic body is made is selected from a group consisting of NBR and NYLON66.

15. The liquid level measurement apparatus as set forth in claim 1, wherein the protecting unit (4) is sealed by forcibly fitting a metal ball (411) into a hole, which is formed through a process for making the second inlet path (34) and has a diameter smaller than that of the metal ball.

16. The liquid level measurement apparatus as set forth in claim 1, wherein the opening (51) further comprises:
a moisture removal filter (511) provided at a junction of the opening (51) and the measuring unit (5) and preventing moisture from entering the measured value converting part (53); and
a pipe conduit (512) provided to protect the measured value converting part (53) from moisture, and communicating with the measured value converting part (53).

## Patentansprüche

1. Flüssigkeitsstand-Messvorrichtung, umfassend:
eine Zufuhreinheit (2), die geschlossen ist, wenn Druckluft in die Zufuhreinheit (2) strömt und Druck der Druckluft einen vorbestimmten Druck übersteigt, und die geöffnet ist, wenn der Druck der Druckluft unterhalb des vorbestimmten Drucks liegt, wobei die Zufuhreinheit (2) eine derartige Steuerung vornimmt, dass die Druckluft mit konstanter Durchflussmenge strömt, wenn die Zufuhreinheit (2) geöffnet ist;
eine Rückstrom-Sperreinheit (3), die abhängig davon, ob die Druckluft in die Zufuhreinheit (2) strömt oder nicht, gesteuert wird, wobei die Rückstrom-Sperreinheit (3) geöffnet und mit einem Flüssigkeitsspeichertank verbunden ist, wenn die Druckluft in die Zufuhreinheit (2) strömt, und geschlossen ist, wenn die Druckluft nicht in die Zufuhreinheit (2) strömt, um **dadurch** zu verhindern, dass die Flüssigkeit, deren Stand zu messen ist, aus dem Tank zurückströmt;
eine Schutzeinheit (4), die geschlossen ist, wenn die durch die Zufuhreinheit (2) geleitete Druckluft durch die Rückstrom-Sperreinheit (4) strömt und der Druck der Druckluft den vorbestimmten Druck übersteigt, und die geöffnet ist, wenn der Druck der Druckluft unterhalb des vorbestimmten Drucks liegt, um auf diese Weise den Strom der Druckluft zu ermöglichen, wobei die Schutzeinheit (4) die Zufuhreinheit (2) abhängig von dem Druck der in die Zufuhreinheit (2) geleiteten Druckluft öffnet oder schließt; und
eine Messeinheit (5), welche die Schutzeinheit (4) abhängig von dem Druck der in die Schutzeinheit (4) geleiteten Druckluft öffnet oder schließt und die Druckluft aus der Schutzeinheit (4) abzieht, wenn die Schutzeinheit (4) offen ist, um anschließend den Druck der Druckluft mit Atmosphärendruck zu vergleichen und den Druck der Druckluft zu berechnen und damit einen Flüssigkeitsstand der in dem Tank gespeicherten Flüssigkeit zu messen,
wobei
die Zufuhreinheit (2) aufweist:
einen Luftzufuhrteil (21) zum Ziehen der Druckluft;
eine zweite Kammer (22) zum Speichern der von dem Luftzufuhrteil (21) zugeleiteten Druckluft;
eine Strömungs-Steuereinheit (23), die abhängig vom Druck der durch den Luftzufuhrteil (21) geleiteten Druckluft geöffnet oder geschlossen wird;
eine erste Kammer (24) zum Speichern der durch die Strömungs-Steuereinheit (23) geleiteten Druckluft;
eine Strömungs-Justiereinheit (25) zum Justieren einer Durchflussmenge der aus der ersten Kammer (24) geförderten Druckluft vor dem Zuführen der Druckluft;
einen ersten Zuführweg (26) zum Austragen der durch die Durchfluss-Justiereinheit (25) geleiteten Druckluft; und
eine erste Teilungseinheit (27), die abhängig von dem Druck der in der zweiten Kammer 22) gespeicherten Druckluft gesteuert und bewegt wird,
wobei die Rückstrom-Sperreinheit (3) umfasst:
einen ersten Einlassweg (31) zum Ziehen der Druckluft durch den ersten Zufuhrweg (26);
eine dritte Kammer (32) zum Speichern der aus dem ersten Einlassweg (31) transportierten Druckluft; und
ein Rückstrom-Sperrventil (33), das von der ersten Teilungseinheit (27) der Zufuhreinheit (2) zum Öffnen oder Schließen gesteuert wird,
wobei die Schutzeinheit (4) umfasst:
eine Überdruck-Sperreinheit (42);
eine vierte Kammer zum Speichern der durch die Überdruck-Sperreinheit (43) geleiteten Druckluft;
einen dritten Zufuhrweg (44) zum Austragen der in der vierten Kammer (43) gespeicherten Druckluft;
ein Strömungssteuerglied (425) und eine zweite Teilungseinheit (45) zum Steuern der Strömungssteuereinheit (23) der Zufuhreinheit (2), und
wobei die Messeinheit (5) umfasst:
einen dritten Einlassweg (52) zum Abziehen der Druckluft durch den dritten Zufuhrweg (52);
eine Öffnung (51), die als mit einer Atmosphäre kommunizierender Kanal dient;
einen Messwert-Wandlerteil (52) zum Vergleichen von durch die Öffnung nachgewiesenem Atmosphärendruck mit Druck der durch den dritten Einlassweg (52) geleiteten Druckluft, um **dadurch** den Druck der Druckluft zu berechnen und den Flüssigkeitsstand zu messen;
einen Überdruck-Steuerteil (54) und eine dritte Teilungseinheit (55) zum Steuern der Überdruck-Sperreinheit (42) der Schutzeinheit (4),
**dadurch gekennzeichnet, dass** die Rückstrom-Sperreinheit einen zweiten Zufuhrweg (34) zum Austragen eines Teils der in der dritten Kammer (32) gespeicherten Druckluft aufweist, und dass die Schutzeinheit aufweist: einen zweiten Einlassweg (34) zum Abziehen der durch den zweiten Zufuhrweg (34) geleiteten Druckluft; und
wobei die Überdruck-Sperreinheit (42) abhängig vom Druck der aus dem zweiten Einlassweg (34) zugeführten Druckluft geöffnet oder geschlossen wird.

2. Flüssigkeitsstand-Messvorrichtung nach Anspruch 1, bei der die Strömungssteuereinheit (23) aufweist:
einen an der Zufuhreinheit befestigten Hohlkörper (231);
einen hohlen, an dem Körper (231) befestigten Trägerblock (233) mit einem an einer vorbestimmten Stelle in dem Trägerblock (233) zum Ziehen von Luft ausgebildeten Durchgangsloch;
ein bewegliches Ventil (232) zum Steuern eines Stroms von Druckluft in den Körper (231);
einen O-Ring (2325) zum Öffnen oder Schließen der Strömungssteuereinheit (23) abhängig von einer Bewegung des beweglichen Ventils (232);
ein Ventilsteuerglied (234), welches zwischen einem unteren Ende des beweglichen Ventils (232) und einem oberen Ende des Trägerblocks (233) gelagert ist und eine Bewegung des beweglichen Ventils (232) steuert; und
einen O-Ring (2513a) zum Verhindern, dass die Druckluft aus dem Bereich zwischen der Zufuhreinheit (2) und dem Körper (231) entweicht,
wobei das Rückstrom-Sperrventil (33) umfasst:
einen an der Rückstrom-Sperreinheit (3) befestigten Hohlkörper (331);
einen an dem Körper (331) befestigten hohlen Trägerblock (333) mit einem an einer vorbestimmten Stelle in dem Trägerblock zum Ziehen von Luft ausgebildeten Durchgangsloch;
ein bewegliches Ventil (332) zum Steuern eines Druckluftstroms in dem Körper (331);
einen O-Ring (335) zum Öffnen oder Schließen des Rückstrom-Sperrventils abhängig von einer Bewegung des beweglichen Ventils;
ein Ventilsteuerglied (334), welches zwischen einem unteren Ende des beweglichen Ventils (332) und einem oberen Ende des Trägerblocks (333) gelagert ist und eine Bewegung des beweglichen Ventils (332) steuert; und
einen O-Ring zum Verhindern, dass Druckluft aus dem Bereich zwischen der Rückstrom-Sperreinheit (3) und dem Körper (331) entweicht, und
wobei die Überdruck-Sperreinheit (42) umfasst:
einen Hohlkörper (421), der in einer Seitenwand eine Einlassöffnung aufweist, die mit dem zweiten Einlassweg (34) kommuniziert, um Druckluft zu ziehen, wobei die in die Einlassöffnung eingeleitete Druckluft in dem Körper zirkuliert;
ein Überdruck-Sperrventil (422), welches beweglich in den Körper (421) vorgesehen ist und die Überdruck-Sperreinheit (42) öffnet oder schließt;
einen O-Ring (4217) zum Öffnen oder Schließen der Überdruck-Sperreinheit (42) durch Bewegen des Überdruck-Sperrventils (422);
ein Ventilsteuerglied (424) zum Steuern der Bewegung des Überdruck-Sperrventils (422);
einen Trägerblock (423) zum Tragen des Ventilsteuerglieds (424);
einen O-Ring (4212a) zum Verhindern, dass die Druckluft aus dem Bereich zwischen der Schutzeinheit (4) und dem Körper (421) entweicht; und
ein Strömungssteuerglied (425), welches mit einem unteren Ende des Trägerblocks (423) verbunden ist und von einer Oberseite der zweiten Teilungseinheit (45) gehalten wird, wobei das Strömungssteuerglied (425) eine Bewegung der zweiten Teilungseinheit (45) abhängig von dem Druck der in der ersten Kammer (24) gespeicherten Druckluft steuert.

3. Flüssigkeitsstand-Messvorrichtung nach Anspruch 2, bei der der Körper (231) der Strömungssteuereinheit (23) außerdem aufweist: einen Strömungskanal (2311 a), der eine vorbestimmte Tiefe besitzt und an einer Oberseite des Körpers, die das bewegliche Ventil (232) berührt, vorgesehen ist, um einen ungehinderten Strom der Druckluft zu ermöglichen, wenn die Strömungssteuereinheit (23) geöffnet ist, und
wobei sowohl das Rückstrom-Sperrventil (33) als auch die Überdruck-Sperreinheit (42) auf der Oberseite ihres Baukörpers einen Strömungskanal (4211a) aufweist, der die gleiche Funktion hat wie der Strömungskanal (2311) der Strömungssteuereinheit (23).

4. Flüssigkeitsstand-Messvorrichtung nach Anspruch 1, bei der der Luftzufuhrteil (21) außerdem aufweist:
ein Feuchtigkeitsbeseitigungsfilter (211) am Ende des Luftzufuhrteils (21) zum Filtern der zugeführten Druckluft, um reine Luft zuzuführen; und
einen zwischen dem Filter (211) und dem Luftzufuhrteil (21) vorgesehen O-Ring (212) zum Verhindern des Entweichens der Druckluft.

5. Flüssigkeitsstand-Messvorrichtung nach Anspruch 4, bei der das Feuchtigkeitsbeseitigungsfilter (211) einen Lagerungsflansch (2111) aufweist, so dass das Filter (211) an dem Luftzufuhrteil (1) durch Formschluss ohne Verwendung zusätzlicher Lagerungskomponenten gelagert wird.

6. Flüssigkeitsstand-Messvorrichtung nach Anspruch 1, bei der die Strömungsjustiereinheit (25) außerdem aufweist:
einen Strömungszufuhrteil (253) zum Kommunizieren mit dem ersten Zufuhrweg (26);
ein Strömungsjustierventil (251) zum Justieren einer dem Strömungszufuhrteil (253) zugeführten Menge Druckluft; und
eine O-Ring (2513a) und eine Schutzkappe (252) zum Verhindern, dass Luftdruck aus dem Bereich zwischen der Strömungsjustiereinheit (25) und der Zufuhreinheit (2) entweicht.

7. Flüssigkeitsstand-Messvorrichtung nach Anspruch 6, bei der das Strömungsjustierventil (251) in Richtung des einen Endes derart verjüngt ist, dass es geneigt verläuft und zum Einstellen einer Querschnittsfläche eines Strömungsjustierwegs (25, 16) dient, und die erste Kammer (24) und den Strömungszufuhrteil (253) miteinander kommunizieren lässt und **dadurch** der Durchflussmenge der zu dem Strömungszufuhrteil (253) gelieferten Druckluft einstellt.

8. Flüssigkeitsstand-Messvorrichtung nach Anspruch 2, bei der das Überdruck-Steuerteil (54) aufweist:
ein Überdruck-Steuerglied (542), welches von einer Oberseite des dritten Teilungseinheit (55) getragen wird und eine Bewegung der dritten Teilungseinheit (55) abhängig von dem Druck der in die vierte Kammer (43) geleiteten Druckluft steuert, und
einen mit einer Oberseite des Überdruck-Steuerglieds (542) verbundenen Druckjustierteil (541), der an der Messeinheit (5) befestigt ist, um **dadurch** abhängig von dem Befestigungsmaß einen Druck einzustellen, bei dem das Überdrucksteuerglied (542) anspricht.

9. Flüssigkeitsstand-Messvorrichtung nach Anspruch 1, bei der die Messeinheit (5) außerdem aufweist:
einen Deckel (47) zum Schützen interner Bauteile gegenüber der Außenumgebung, und abgedichtet durch Einfügen eines O-Rings an einer Verbindungsstelle des Deckels (47) und der Messeinheit (5).

10. Flüssigkeitsstand-Messvorrichtung nach Anspruch 6, bei der der Strömungszufuhrteil (253) außerdem einen Zufuhrweg aufweist, um zu prüfen, ob die Bauteile korrekt arbeiten, indem ein vorbestimmter Luftdruck in den ersten Zufuhrweg (26) injiziert wird, ohne die Luft durch den Luftzufuhrteil (21) passieren zu lassen.

11. Flüssigkeitsstand-Messvorrichtung nach Anspruch 8, bei der die Schutzeinheit (4) außerdem aufweist:
eine mit dem zweiten Einlassweg (34) und der vierten Kammer (43) kommunizierende Haft-Verhinderungseinheit (46), die Druckluft auslässt, um zu verhindern, dass ein O-Ring (4217) der mit dem Überdrucksperrventil (422) verbunden ist und die Überdruck-Sperreinheit (43) öffnet oder schließt, wenn auf das innere der Schutzeinheit (4) Überdruck einwirkt und die Überdruck-Sperreinheit (43) geschlossen wird, an dem Körper der Überdruck-Sperreinheit (43) haften bleibt, so dass das Überdrucksteuerglied das Überdrucksperrventil (422) über die dritte Teilungseinheit (55) bewegt.

12. Flüssigkeitsstand-Messvorrichtung nach Anspruch 11, bei der die Haftungs-Verhinderungseinheit (46) aufweist:
ein Haftungs-Sperrventil (461) zum Steuern einer Verbindung zwischen der Haftungs-Verhinderungseinheit (46) und der vierten Kammer (43);
ein Ventilsteuerglied (463) zum Steuern der Bewegung des Haftungs-Sperrventils (461);
eine Schutzkappe (462) zum Tragen des Ventilsteuerglieds (463) und zum Schützen des Haftungs-Sperrventils (461) gegenüber der Außenumgebung, wobei ein Einführloch (4624) in der Schutzkappe (462) ausgebildet ist, so dass das Haftungs-Sperrventil (461) beweglich in das Einführloch (4624) eingesetzt ist;
einen O-Ring (4612a) zum Öffnen und Schließen der Haftungs-Verhinderungseinheit (46) durch eine Bewegung des Haftungs-Sperrventils (461), und
einen O-Ring (4622a) zum Bilden einer Dichtung zwischen der Schutzkappe (462) und der Schutzeinheit 4).

13. Flüssigkeitsstand-Messvorrichtung nach Anspruch 1, bei der die erste Teilungseinheit (27) weiterhin aufweist:
einen aus Kunststoff bestehenden elastischen Körper (271) mit Flexibilität und Haltbarkeit;
einen oberen Anschlag (272) zum Abstützen einer Oberseite des elastischen Körpers (271); und
einen unteren Anschlag (273) zum Abstützen einer Unterseite des elastischen Körpers (271), und
wobei jede von der zweiten und der dritten Teilungseinheit (45, 55) außerdem einen aus dem gleichen Material wie die erste Teilungseinheit (27) bestehenden elastischen Körper (271), einen oberen Anschlag und einen unteren Anschlag aufweist.

14. Flüssigkeitsstand-Messvorrichtung nach Anspruch 13, bei dem der Kunststoff, aus dem der elastische Körper besteht, ausgebildet ist aus einer Gruppe, welche NBR und NYLON66 umfasst.

15. Flüssigkeitsstand-Messvorrichtung nach Anspruch 1, bei der die Schutzeinheit (4) abgedichtet ist durch zwangsweises Einpassen einer Metallkugel (411) in ein Loch, welches ausgebildet ist durch eine Prozess zum Erstellen des zweiten Einlasswegs (34), wobei das Loch einen Durchmesser aufweist, der kleiner ist als der der Metallkugel (411).

16. Flüssigkeitsstand-Messvorrichtung nach Anspruch 1, bei der die Öffnung (51) weiterhin aufweist:
ein Flüssigkeitsbeseitigungsfilter (511) an einer Verbindungsstelle der Öffnung (51) und der Messeinheit (5) zum Verhindern, dass Feuchtigkeit in den Messwert-Wandlerteil (53) eintritt; und
eine Rohrleitung (512), die rechtwinklig angeordnet ist, um den Messwert-Wandlerteil (53) gegen Feuchtigkeit zu schützen, und der mit dem Messwert-Wandlerteil (53) kommuniziert.

## Revendications

1. Appareil de mesure d'un niveau de liquide, comprenant :
une unité d'alimentation (2), laquelle est fermée lorsque de l'air comprimé circule jusque dans l'unité d'alimentation (2) et lorsque la pression de l'air comprimé dépasse une pression prédéterminée, et laquelle est ouverte lorsque la pression de l'air comprimé est inférieure à la pression prédéterminée, l'unité d'alimentation (2) assurant un réglage de telle sorte que l'air comprimé circule à un débit constant lorsque l'unité d'alimentation (2) est ouverte ;
une unité de prévention du refoulement (3) réglée en fonction de si oui ou non l'air comprimé circule jusque dans l'unité d'alimentation (2), l'unité de prévention du refoulement (3) étant ouverte et reliée à un réservoir de stockage de liquide lorsque l'air comprimé circule jusque dans l'unité d'alimentation (2), et étant fermée lorsque l'air comprimé ne circule pas jusque dans l'unité d'alimentation (2), ceci empêchant que le liquide dont on va mesurer le niveau ne retourne en arrière à partir du réservoir ;
une unité de protection (4), laquelle est fermée lorsque l'air comprimé alimenté à travers l'unité d'alimentation (2) circule à travers l'unité de prévention du refoulement (4) et lorsque la pression de l'air comprimé dépasse la pression prédéterminée, et laquelle est ouverte lorsque la pression de l'air comprimé est inférieure à la pression prédéterminée, ceci permettant à l'air comprimé de circuler, l'unité de protection (4) ouvrant ou fermant l'unité d'alimentation (2) en fonction de la pression de l'air comprimé alimenté jusque dans l'unité d'alimentation (2), et
une unité de mesure (5) ouvrant ou fermant l'unité de protection (4) en fonction de la pression de l'air comprimé alimenté jusque dans l'unité de protection (4), et aspirant l'air comprimé à partir de l'unité de protection (4) lorsque l'unité de protection (4) est ouverte, comparant ensuite la pression de l'air comprimé à la pression atmosphérique, et calculant la pression de l'air comprimé, mesurant ainsi un niveau de liquide stocké dans le réservoir,
dans lequel
l'unité d'alimentation (2) comprend :
une partie d'alimentation d'air (21) destinée à aspirer l'air comprimé ;
une deuxième chambre (22) destinée à stocker l'air comprimé alimenté à partir de la partie d'alimentation d'air (21) ;
une unité de réglage de débit (23), laquelle est ouverte ou fermée en fonction de la pression de l'air comprimé alimenté à travers la partie d'alimentation d'air (21) ;
une première chambre (24) destinée à stocker l'air comprimé alimenté à travers l'unité de réglage de débit (23) ;
une unité de régulation de débit (25) destinée à réguler un débit de l'air comprimé alimenté à partir de la première chambre (24), avant alimentation de l'air comprimé ;
un premier trajet d'alimentation (26) destiné à évacuer l'air comprimé alimenté à travers l'unité de régulation de débit (25), et
une première unité de cloisonnement (27) réglée et déplacée en fonction de la pression de l'air comprimé stocké dans la deuxième chambre (22),
l'unité de prévention du refoulement (3) comprend :
un premier trajet d'admission (31) destiné à aspirer l'air comprimé à travers le premier trajet d'alimentation (26) ;
une troisième chambre (32) destinée à stocker l'air comprimé alimenté à partir du premier trajet d'admission (31), et
une soupape de prévention du refoulement (33) réglée par la première unité de cloisonnement (27) de l'unité d'alimentation (2) de manière à être ouverte ou fermée ;
l'unité de protection (4) comprend :
une unité de prévention de la surpression (42);
une quatrième chambre (43) destinée à stocker l'air comprimé alimenté à travers l'unité de prévention de la surpression (43) ;
un troisième trajet d'alimentation (44) destiné à évacuer l'air comprimé stocké dans la quatrième chambre (43) ;
un élément de réglage de débit (425) et une deuxième unité de cloisonnement (45) destinée à régler l'unité de réglage de débit (23) de l'unité d'alimentation (2), et
l'unité de mesure (5) comprend :
un troisième trajet d'admission (52) destiné à aspirer l'air comprimé à travers le troisième trajet d'alimentation (52) ;
une ouverture (51) servant de passage qui communique avec une atmosphère ;
une partie de conversion de valeur de mesure (53) destinée à comparer la pression atmosphérique détectée à travers l'ouverture avec la pression de l'air comprimé alimenté à travers le troisième trajet d'admission (52), calculant ainsi la pression de l'air comprimé et mesurant le niveau du liquide ;
une partie de réglage de la surpression (54) et une troisième partie de cloisonnement (55) destinée à régler l'unité de prévention de la surpression (42) de l'unité de protection (4),
**caractérisé en ce que**
l'unité de prévention du refoulement comprend un deuxième trajet d'alimentation (34) destiné à évacuer une certaine partie de l'air comprimé stocké dans la troisième chambre (32), et l'unité de protection comprend un deuxième trajet d'admission (34) destiné à aspirer l'air comprimé alimenté à travers le deuxième trajet d'alimentation (34), et
l'unité de prévention de la surpression (42) est ouverte ou fermée en fonction de la pression de l'air comprimé alimenté à partir du deuxième trajet d'admission (34).

2. Appareil de mesure d'un niveau de liquide selon la revendication 1, dans lequel
l'unité de réglage de débit (23) comprend :
un corps creux (231) fixé à l'unité d'alimentation ;
un bloc de support creux (233) fixé au corps (231), un trou traversant étant formé en une position prédéterminée dans le bloc de support (233) afin d'aspirer l'air ;
une soupape mobile (232) destinée à régler un débit d'air comprimé dans le corps (231) ;
un joint torique (2325) destiné à ouvrir ou fermer l'unité de réglage de débit (23), en fonction du déplacement de la soupape mobile (232) ;
un élément de réglage de soupape (234) supporté entre une extrémité inférieure de la soupape mobile (232) et une extrémité supérieure du bloc de support (233), et réglant le déplacement de la soupape mobile (232), et
un joint torique (2513a) destiné à empêcher l'air comprimé de fuir entre l'unité d'alimentation (2) et le corps (231) ;
l'unité de prévention du refoulement (33) comprend :
un corps creux (331) fixé à l'unité de prévention du refoulement (3) ;
un bloc de support creux (333) fixé au corps (331), un trou traversant étant formé en une position prédéterminée dans le bloc de support afin d'aspirer l'air ;
une soupape mobile (332) destinée à régler un débit d'air comprimé dans le corps (331) ;
un joint torique (335) destiné à ouvrir ou fermer la soupape de prévention du refoulement, en fonction du déplacement de la soupape mobile ;
un élément de réglage de soupape (334) supporté entre une extrémité inférieure de la soupape mobile (332) et une extrémité supérieure du bloc de support (333), et réglant le déplacement de la soupape mobile (332), et
un joint torique destiné à empêcher l'air comprimé de fuir entre l'unité de prévention du refoulement (3) et le corps (331),
l'unité de prévention de la surpression (42) comprend :
un corps creux (421) présentant sur une paroi latérale un orifice d'admission qui communique avec le deuxième trajet d'admission (34) afin d'aspirer l'air comprimé, l'air comprimé alimenté jusque dans l'orifice d'admission circulant dans le corps ;
une soupape de prévention de la surpression (422) prévue de manière à pouvoir se déplacer dans le corps (421) et ouvrant ou fermant l'unité de prévention de la surpression (42) ;
un joint torique (4217) destiné à ouvrir ou fermer l'unité de prévention de la surpression (42) par un déplacement de la soupape de prévention de la surpression (422) ;
un élément de réglage de soupape (424) destiné à régler le déplacement de la soupape de prévention de la surpression (422) ;
un bloc de support (423) destiné à supporter l'élément de réglage de soupape (424) ;
un joint torique (4212a) destiné à empêcher l'air comprimé de fuir entre l'unité de protection (4) et le corps (421), et
un élément de réglage de débit (425) relié à une extrémité inférieure du bloc de support (423) et supporté par une surface supérieure de la deuxième unité de cloisonnement (45), l'élément de réglage de débit (425) réglant le déplacement de la deuxième unité de cloisonnement (45), en fonction de la pression de l'air comprimé stocké dans la première chambre (24).

3. Appareil de mesure d'un niveau de liquide selon la revendication 2, dans lequel le corps (231) de l'unité de réglage de débit (23) comprend en outre un canal de débit (2311a), qui présente une profondeur prédéterminée et est prévu sur une surface supérieure du corps (231) en contact avec la soupape mobile (232) afin de permettre à l'air comprimé de circuler sans à-coups lorsque l'unité de réglage de débit (23) est ouverte, et
chacun parmi la soupape de prévention de refoulement (33) et l'unité de prévention de la surpression (42) comprend, sur une surface supérieure de son corps, un canal de débit (4211a) destiné à assurer la même fonction que le canal de débit (2311a) de l'unité de réglage de débit (23).

4. Appareil de mesure d'un niveau de liquide selon la revendication 1, dans lequel la partie d'alimentation d'air (21) comprend en outre :
un filtre d'élimination de l'humidité (211) prévu au niveau d'une extrémité de la partie d'alimentation d'air (21), et filtrant l'air comprimé alimenté afin de fournir de l'air pur, et
un joint torique (212) prévu entre le filtre (211) et la partie d'alimentation d'air (21) et empêchant la fuite de l'air comprimé.

5. Appareil de mesure d'un niveau de liquide selon la revendication 4, dans lequel le filtre d'élimination d'humidité (211) comprend une bride de montage (2111) telle que le filtre (211) est monté sur la partie d'alimentation d'air (21) par raccord sans recourir à un composant de montage supplémentaire.

6. Appareil de mesure d'un niveau de liquide selon la revendication 1, dans lequel l'unité de régulation de débit (25) comprend en outre :
une partie d'alimentation de débit (253) destinée à communiquer avec le premier trajet d'alimentation (26) ;
une soupape de régulation de débit (251) destinée à réguler une quantité d'air comprimé alimentée vers la partie d'alimentation de débit (253), et
un joint torique (2513a) ainsi qu'un bouchon protecteur (252) afin d'empêcher la fuite de l'air comprimé entre l'unité de régulation de débit (25) et l'unité d'alimentation (2).

7. Appareil de mesure d'un niveau de liquide selon la revendication 6, dans lequel la soupape de régulation de débit (251) présente un amincissement vers une extrémité, de telle sorte qu'elle est inclinée et qu'elle régule une section d'un trajet de régulation de débit (2516) permettant à la première chambre (24) et à la partie d'alimentation de débit (253) de communiquer entre elles, régulant ainsi un débit d'air comprimé alimenté vers la partie d'alimentation de débit (253).

8. Appareil de mesure d'un niveau de liquide selon la revendication 2, dans lequel la partie de réglage de la surpression (54) comprend :
un élément de réglage de la surpression (542) supporté par une surface supérieure de la troisième unité de cloisonnement (55), et réglant le déplacement de la troisième unité de cloisonnement (55), en fonction de la pression de l'air comprimé alimenté jusque dans la quatrième chambre (43), et
une partie de régulation de compression (541) reliée à une surface supérieure de l'élément de réglage de la surpression (542), et fixée à l'unité de mesure (5), régulant ainsi une pression à laquelle l'élément de réglage de la surpression (542) réagit, en fonction du degré de fixation de celle-ci.

9. Appareil de mesure d'un niveau de liquide selon la revendication 1, dans lequel l'unité de mesure (5) comprend en outre :
un couvercle (57) destiné à protéger des composants internes d'un extérieur, et scellé en insérant un joint torique au niveau d'une jonction entre le couvercle (57) et l'unité de mesure (5).

10. Appareil de mesure d'un niveau de liquide selon la revendication 6, dans lequel la partie d'alimentation de débit (253) comprend en outre un trajet d'alimentation destiné à vérifier si les composants fonctionnent correctement, en injectant une pression prédéterminée d'air dans le premier trajet d'alimentation (26) sans faire passer l'air à travers la partie d'alimentation d'air (21).

11. Appareil de mesure d'un niveau de liquide selon la revendication 8, dans lequel l'unité de protection (4) comprend en outre :
une unité de prévention de l'adhérence (46) communiquant avec le deuxième trajet d'admission (34) et la quatrième chambre (43), et évacuant l'air comprimé à travers celle-ci, de manière à empêcher l'adhérence au corps de l'unité de prévention de la surpression (43) d'un joint torique (4217), lequel est relié à la soupape de prévention de la surpression (422) et ouvre ou ferme l'unité de prévention de la surpression (43) lorsque la surpression agit sur un intérieur de l'unité de protection (4) et lorsque l'unité de prévention de la surpression (43) est fermée, de sorte que l'élément de réglage de la surpression déplace la soupape de prévention de la surpression (422) à travers la troisième unité de cloisonnement (55).

12. Appareil de mesure d'un niveau de liquide selon la revendication 11, dans lequel l'unité de prévention de l'adhérence (46) comprend :
une soupape de prévention de l'adhérence (461) destinée à régler la liaison entre l'unité de prévention de l'adhérence (46) et la quatrième chambre (43) ;
un élément de réglage de soupape (463) destiné à régler le déplacement de la soupape de prévention de l'adhérence (461) ;
un bouchon protecteur (462) destiné à supporter l'élément de réglage de soupape (463) et à protéger la soupape de prévention de l'adhérence (461) d'un extérieur, doté d'un trou d'insertion (4624) formé dans le bouchon protecteur (462), de telle sorte que la soupape de prévention de l'adhérence (461) soit insérée de manière à pouvoir se déplacer dans le trou d'insertion (4624) ;
un joint torique (4612a) destiné à ouvrir ou fermer l'unité de prévention de l'adhérence (46) par le déplacement de la soupape de prévention de l'adhérence (461), et
un joint torique (4622a) destiné à former un joint entre le bouchon protecteur (462) et l'unité de protection (4).

13. Appareil de mesure d'un niveau de liquide selon la revendication 1, dans lequel la première unité de cloisonnement (27) comprend en outre :
un corps élastique (271) fabriqué à partir d'un matériau de résine synthétique présentant une souplesse et une durabilité ;
une butée supérieure (272) destinée à supporter une surface supérieure du corps élastique (271) et,
une butée inférieure (273) destinée à supporter une surface inférieure (271) du corps élastique (271), et
chacune des deuxième et troisième unités de cloisonnement (45, 55) comprend en outre un corps élastique (271) fabriqué à partir du même matériau que celui de la première unité de cloisonnement (27), une butée supérieure et une butée inférieure.

14. Appareil de mesure d'un niveau de liquide selon la revendication 13, dans lequel le matériau de résine synthétique, à partir duquel est fabriqué le corps élastique, est sélectionné parmi un groupe consistant en le NBR et NYLON66.

15. Appareil de mesure d'un niveau de liquide selon la revendication 1, dans lequel l'unité de protection (4) est scellée par le raccord forcé d'une bille métallique (411) dans un trou, lequel est formé lors d'un processus destiné à fabriquer le deuxième trajet d'admission (34) et présente un diamètre inférieur à celui de la bille métallique (411).

16. Appareil de mesure d'un niveau de liquide selon la revendication 1, dans lequel l'ouverture (51) comprend en outre :
un filtre d'élimination d'humidité (511) prévu au niveau d'une jonction entre l'ouverture (51) et l'unité de mesure (5), et empêchant l'humidité de pénétrer dans la partie de conversion de valeur mesurée (53), et
une conduite formant tube (512) prévue perpendiculairement afin de protéger la partie de conversion de valeur mesurée (53) de l'humidité, et communiquant avec la partie de conversion de valeur mesurée (53).
